# EUROPÄISCHE PATENTSCHRIFT

(11) **EP 3 938 165 B1**
(45) Veröffentlichungstag und Bekanntmachung des Hinweises auf die Patenterteilung: **27.05.2026**
(21) Anmeldenummer: 20712466.0
(22) Anmeldetag: 09.03.2020
(51) Int. Cl.: B29C 45/16

(54) **VERFAHREN ZUR HERSTELLUNG EINES BAUTEILS UND VORRICHTUNG ZUR HERSTELLUNG EINES BAUTEILS**
METHOD FOR PRODUCING A COMPONENT AND DEVICE FOR PRODUCING A COMPONENT
PROCÉDÉ DE FABRICATION D'UN COMPOSANT ET DISPOSITIF DE FABRICATION D'UN COMPOSANT

(30) Priorität: 14.03.2019 DE 102019106561
(43) Veröffentlichungstag der Anmeldung: 19.01.2022
(60) Teilanmeldung: 26163236.8
(73) Patentinhaber: Leonhard Kurz Stiftung & Co. KG, 90763 Fürth (DE)
(72) Erfinder: HAHN, Martin, 91567 Herrieden (DE)
(74) Vertreter: Zinsinger, Norbert
(86) Internationale Anmeldenummer: PCT/EP2020/056226
(87) Internationale Veröffentlichungsnummer: WO 2020/182736

(56) Entgegenhaltungen:
- EP-A1- 1 655 122
- EP-A1- 1 977 875
- DE-A1- 102004 041 833
- DE-A1- 102010 019 625
- US-A1- 2007 184 273

## Beschreibung

Die Erfindung betrifft ein Verfahren zur Herstellung eines Bauteils sowie eine Vorrichtung zur Herstellung eines Bauteils.

Es ist bekannt, Kunststoffbauteile mittels Spritzgießens in einer Spritzgießvorrichtung herzustellen. Derartige Kunststoffbauteile werden beispielsweise im Automobilbau für Automobilinnenteile wie Türleisten, Leisten in Instrumententafeln und Mittelkonsolblenden, im Unterhaltungselektronikbereich für Dekorleisten an Fernsehgeräten oder im Telekommunikationsbereich für Gehäuseschalen tragbarer Geräte wie Mobiltelefone oder im Sicherheitsbereich eingesetzt.

Die Herstellung derartiger Kunststoffbauteile mittels eines als "In-Mould-Decoration" bekannten Herstellungsverfahrens wird beispielsweise in dem Dokument DE 10 2010 020 039 A1 beschrieben. Hierbei wird zur Herstellung eines Kunststoffbauteils eine Transferfolie eingesetzt. Diese Transferfolie wird von oben nach unten durch ein Spritzgusswerkzeug geführt und die Folie beim Schließen des Werkzeugs zwischen Werkzeughälften geklemmt. Beim Einspritzen der Schmelze wird die Transferfolie durch den Druck der Schmelze an die Wand einer Kavität gepresst. Nach dem Abkühlen wird die Polyester-Trägerfolie der Transferfolie sodann von dem mit der Transferlage der Transferfolie dekorierten Bauteil abgezogen.

Nachteilig ist hierbei jedoch die Empfindlichkeit des derart dekorierten Kunststoffbauteils in Hinblick auf den Weitertransport und die Weiterverarbeitung dieses Kunststoffbauteils.

Es ist zwar bekannt, Kunststoffbauteile mit einer Schutzschicht zu versehen, um diese Kunststoffbauteile gegen äußere Einflüsse zu schützen. Dies geschieht jedoch in Überflutungsvorrichtungen, welche oft eine große räumliche Distanz zu der Spritzgießvorrichtung aufweisen. Um die in der Spritzgießvorrichtung hergestellten Kunststoffbauteile mit einer Schutzschicht zu versehen, müssen diese in Verpackungen, welche die empfindliche Oberfläche der Kunststoffbauteile schützen, von der Spritzgießvorrichtung zu einer Überflutungsvorrichtung transportiert werden, um diese dort mit einer Schutzschicht zu versehen. Hierbei sind die aufwendigen, in der Regel nicht ökologischen Verpackungen mit einem hohen Kosten- und Zeitaufwand verbunden.

DE 10 2010 019 625 A1 beschreibt ein Verfahren zur Herstellung einer Verbund- oder Hybridkonstruktion.

EP 1 655 122 A1 beschreibt ein Verfahren zum Hinterspritzen, Hinterpressen oder Quellflussprägen und ein entsprechendes Formwerkzeug.

US 2007/0184273 A1 beschreibt ein Umspritzen von Inserts.

DE 10 2018 113 194 A1 beschreibt ein Verfahren und eine Anlage zur Herstellung eines Dekorbauteils, sowie ein Dekorbauteil.

DE 10 2004 041 833 A1 beschreibt einen dekorierten Spritzgussartikel, ein Verfahren zur Herstellung eines dekorierten Spritzgussartikels sowie eine Transferfolie zur Verwendung in einem derartigen Verfahren.

Es ist somit Aufgabe der vorliegenden Erfindung, ein verbessertes Verfahren zur Herstellung eines Bauteils sowie eine verbesserte Vorrichtung zur Herstellung eines Bauteils anzugeben.

Die Aufgabe wird von einem Verfahren zur Herstellung eines Bauteils nach Anspruch 1 gelöst.

Weiter wird diese Aufgabe gelöst durch eine Vorrichtung zur Herstellung eines Bauteils nach Anspruch 9.

Untersuchungen haben gezeigt, dass es möglich ist, den oberen Werkzeugträger mit einem ersten oberen Werkzeugmodul einer ersten Arbeitsstation in der Vorrichtung derart zu verfahren, dass ein zweites oberes Werkzeugmodul mit einem ersten unteren Werkzeugmodul kombiniert werden kann, um eine zweite Arbeitsstation auszubilden. Hierbei kann ein in der ersten Arbeitsstation in einem ersten Herstellungsschritt hergestelltes Bauteil in dem ersten unteren Werkzeugmodul verbleiben. So kann die erste Arbeitsstation beispielsweise als eine Spritzgießstation ausgebildet sein und die zweite Arbeitsstation als eine Überflutungsstation ausgebildet sein. Hierbei verbleibt das in der Spritzgießstation hergestellte Teil beispielsweise in dem ersten unteren Werkzeugmodul, während die erste Arbeitsstation durch Verfahren des oberen Werkzeugträgers mit dem ersten oberen Werkzeugmodul aufgelöst wird und das zweite obere Werkzeugmodul derart kombiniert wird, dass die zweite Arbeitsstation ausgebildet wird. Hierdurch wird der Nutzungsgrad und damit die Wirtschaftlichkeit der Arbeitsstationen bedeutend gesteigert und im Idealfall verdoppelt.

Durch die Erfindung ist es nun möglich, die Umwelt zu schonen und die Prozesskosten zu senken:
Untersuchungen haben gezeigt, dass das in der ersten Arbeitsstation hergestellte Teil nicht aus der Vorrichtung entnommen werden muss und hierdurch nicht zu einer weiteren Vorrichtung transportiert werden muss. Hierbei entfällt auch die ökonomisch und ökologisch nachteilige Verpackung der Teile für den Transport zu der weiteren Vorrichtung.

Vorzugsweise lässt sich zumindest ein oberer Werkzeugträger des zumindest einen oberen Werkzeugträgers relativ zu zumindest einem unteren Werkzeugträger des zumindest einen unteren Werkzeugträgers verfahren.

Unter "verfahren" wird hierbei vorzugsweise eine Änderung einer Position und/oder einer Ausrichtung zumindest eines Elements, bevorzugt entlang zumindest einer Richtung im Raum, insbesondere relativ zu einem vorbestimmten Bezugssystem, und/oder relativ zu einer Position und/oder Ausrichtung zumindest eines weiteren Elements, bevorzugt entlang zumindest einer weiteren Richtung und/oder der zumindest einen Richtung, verstanden, insbesondere wobei das zumindest eine Element und/oder das zumindest eine weitere Element ausgewählt und/oder kombiniert sind aus: oberer Werkzeugträger, unterer Werkzeugträger, oberes Werkzeugmodul, unteres Werkzeugmodul. Beispielsweise kann das Element oder können die Elemente translatorisch verschoben und/oder rotativ, insbesondere um einen Punkt und/oder Achsen oder mehrere Punkte und/oder Achsen im Raum, gedreht werden.

Der zumindest eine obere und/oder untere Werkzeugträger kann beispielsweise ein Betonboden, insbesondere ein Stahlbetonboden, eine Konstruktion aus Metall, ein Kran, ein oder mehrere Roboterarme und/oder eine Kombination hieraus sein.

Vorteilhafte Ausgestaltungen der Erfindung sind in den Unteransprüchen bezeichnet.

Das erste obere Werkzeugmodul der zumindest zwei oberen Werkzeugmodule des zumindest einen oberen Werkzeugträgers und das zumindest eine erste untere Werkzeugmodul des zumindest einen unteren Werkzeugmoduls des zumindest einen unteren Werkzeugträgers werden in der zumindest einen vorbestimmten Position derart kombiniert, dass ein oder mehrere Arbeitsstationen der ein oder mehreren Arbeitsstationen als Spritzgießstation umfassend ein Spritzgusswerkzeug ausgebildet werden, wobei das Spritzgusswerkzeug das erste obere Werkzeugmodul und das erste untere Werkzeugmodul aufweist, wobei das erste obere Werkzeugmodul eine erste obere Werkzeugformhälfte, mit zumindest einer ersten oberen Werkzeugkavität, aufweist und das erste untere Werkzeugmodul eine
erste untere Werkzeugformhälfte mit zumindest einer ersten unteren Werkzeugkavität aufweist.

Weiter umfasst das Verfahren die folgenden Schritte, insbesondere in der folgenden Abfolge:
a) Schließen des Spritzgusswerkzeugs umfassend die erste obere Werkzeugformhälfte, mit der zumindest einen ersten oberen Werkzeugkavität, und die erste untere Werkzeugformhälfte mit der zumindest einen ersten unteren Werkzeugkavität, wobei zumindest eine von der ersten oberen Werkzeugkavität und der ersten unteren Werkzeugkavität bestimmte erste Spritzgusskavität ausgebildet wird,
b) Spritzgießen zumindest eines Grundkörpers durch Einbringung eines ersten Kunststoffmaterials in die zumindest eine erste Spritzgusskavität,
c) Öffnen des Spritzgusswerkzeugs, wobei der zumindest eine Grundkörper konturfolgend in der zumindest einen ersten unteren oder ersten oberen Werkzeugkavität verbleibt und lediglich zumindest ein erster Teilbereich ein oder mehrerer Oberflächen des zumindest einen Grundkörpers freigelegt wird, wobei zumindest ein zweiter Teilbereich der Oberfläche des Grundkörpers jedoch noch in der ersten oberen oder unteren Werkzeugkavität verbleibt,
d) Entformung des Bauteils umfassend den zumindest einen Grundkörper aus der ersten oberen oder unteren Werkzeugkavität beziehungsweise Werkzeugformhälfte.

Es ist weiter möglich, dass vor dem Schritt a) und/oder d) einfach oder mehrfach folgender weiterer Schritt durchgeführt wird:
a1) Einlegen ein oder mehrerer Einlegeelemente in die zumindest eine erste Spritzgusskavität und/oder auf zumindest einen freiliegenden ersten Teilbereich des zumindest einen freiliegenden ersten Teilbereichs der Oberfläche des zumindest einen Grundkörpers, wobei der zumindest eine Grundkörper konturfolgend in der zumindest einen ersten oberen oder ersten unteren Werkzeugkavität der ersten oberen oder ersten unteren Werkzeugformhälfte verbleibt.

Unter "Einlegen" und/oder "einlegen" wird hierbei vorzugsweise ein Einlegen von Einzelelementen wie beispielsweise von Bögen, Blätter, Etiketten oder dergleichen und/oder ein Zuführen von Endloselementen wie Bahnen, Streifen, Fäden oder dergleichen verstanden.

Vorzugweise umfasst der Grundkörper in dem Schritt d) ein oder mehrere oder alle Einlegeelemente der ein oder mehreren Einlegeelemente.

Nach dem Schritt d), insbesondere zwischen den Schritten a) und b) und/oder b) und c), wird einfach oder mehrfach folgender weiterer Schritt durchgeführt:
e) Aufbringen zumindest einer ersten Deckschicht aus einem zweiten Kunststoffmaterial mittels Überfluten auf zumindest einen Teilbereich der Oberfläche des zumindest einen Grundkörpers.

Hierbei ist es vorteilhaft, die erste Deckschicht derart aufzubringen, dass die ein oder mehreren Einlegeelemente zwischen dem zumindest einen Grundkörper und der zumindest einen ersten Deckschicht eingekapselt sind. Durch diese Einkapselung ist es möglich, die Einlegeelemente entsprechend gut vor Umwelteinflüssen zu schützen oder durch die hierdurch bewirkten Interaktionen besonders vorteilhafte optische und/oder funktionelle Effekte zu erzielen.

Es ist auch möglich, dass bei der Durchführung des Schritts e) der zumindest eine Grundkörper konturfolgend in der ersten oberen oder ersten unteren Werkzeugkavität der ersten oberen oder ersten unteren Werkzeugformhälfte verbleibt.

Bei der Durchführung des Schritts e) wird zumindest eine zweite Spritzgusskavität mittels ein oder mehrerer weiterer oberer Werkzeugformhälften der zumindest zwei oberen Werkzeugmodule des zumindest einen oberen Werkzeugträgers oder ein oder mehrerer weiterer unterer Werkzeugformhälften des zumindest einen unteren Werkzeugmoduls des zumindest einen unteren Werkzeugträgers durch Abdichten der ein oder mehreren weiteren oberen oder unteren weiteren Werkzeugformhälften gegen den zumindest einen Grundkörper, die optionalen ein oder mehreren Einlegeelemente oder die erste obere oder untere weitere Werkzeugformhälfte ausgebildet, und das zweite Kunststoffmaterial in die zumindest eine zweite Spritzgusskavität eingebracht.

Insbesondere wird zwischen den Schritten b), c) und/oder d) und/oder zwischen den Schritten d) und e) einfach oder mehrfach folgender Schritt durchgeführt:
- Vorbehandeln zumindest eines freiliegenden ersten Teilbereichs des zumindest einen freiliegenden ersten Teilbereichs der Oberfläche des zumindest einen Grundkörpers, insbesondere durch ein oder mehrere Bearbeitungsverfahren und/oder Kombinationen aus ein oder mehreren Bearbeitungsverfahren ausgewählt aus: Begasung, Beflammung, Plasmabehandlung, Fluorierung, Bestrahlung, Reinigung, Oberflächenaktivierung, Beschichtung.

Es ist möglich, dass zwischen den Schritten c), d) und/oder e) zumindest eine optische Prüfung zumindest eines Teilbereichs der Oberfläche des zumindest einen Grundkörpers, der ein oder mehreren Einlegeelemente, und/oder des Bauteils mittels eines optischen Sensors oder mehrerer optischer Sensoren, insbesondere ein oder mehrerer Kameras, erfolgt.

Es ist auch möglich, dass nach dem Schritt c) oder d) und/oder zwischen den Schritten d) und e) und/oder nach dem Schritt e) folgender Schritt durchgeführt wird:
- Reinigung, insbesondere mittels Bürsten und/oder Druckluft und/oder Absaugung.

Weiter ist es möglich, dass ein oder mehrere Einlegeelemente der ein oder mehreren Einlegeelemente in Schritt a1) als eine Transferfolie, insbesondere eine Kaltprägefolie, umfassend eine Trägerlage und eine von dieser ablösbare Transferlage, verwendet werden, auf die Transferlage und/oder auf zumindest einen Teilbereich der Oberfläche des zumindest einen Grundkörpers eine Kleberschicht, insbesondere mittels eines Inkjet-Druckkopfes, in zumindest einen ersten Bereich aufgebracht wird, in zumindest einem zweiten Bereich jedoch nicht aufgebracht wird, mittels des Prägewerkzeugs die Transferfolie gegen die ein oder mehreren Oberflächen des zumindest einen Grundkörpers geführt wird, die Kleberschicht aktiviert und die Transferfolie anschließend von der auf dem Grundkörper haftenden Transferlage abgezogen wird, so dass ein durch die Formgebung des ersten Bereichs bestimmter Ausschnitt der Transferlage als die ein oder mehreren Einlegeelemente appliziert werden.

Weiter ist es möglich, dass ein oder mehrere Einlegeelemente der ein oder mehreren Einlegeelemente in Schritt a1) als eine Transferfolie, insbesondere eine Heißprägefolie, bevorzugt umfassend eine Trägerlage und/oder eine von dieser ablösbare Transferlage mit einer Kleberschicht, verwendet werden, insbesondere wobei die Transferfolie mittels eines erhitzten Prägewerkzeugs gegen die ein oder mehreren Oberflächen des zumindest einen Grundkörpers gepresst wird, insbesondere wobei die Kleberschicht sowie die Ablöseschicht der Transferfolie aktiviert und insbesondere wobei die Transferfolie anschließend von der auf dem Grundkörper haftenden Transferlage abgezogen wird, insbesondere wobei hierdurch ein durch die Formgebung des Prägewerkzeugs bestimmter Ausschnitt der Transferlage als die ein oder mehreren Einlegeelemente appliziert werden.

Weiter ist es auch möglich, dass ein oder mehrere Schritte der folgenden weiteren Schritte und/oder dass zumindest eine Kombination von ein oder mehreren Schritten der folgenden ein oder mehreren Schritte durchgeführt werden, insbesondere ausgewählt aus: Bedrucken, insbesondere Inkjet-Druck und/oder Tampondruck, Etikettieren, insbesondere Aufkleben von Labels, Ein- und/oder Aufbringen von Lasermarkierungen, Lasern, insbesondere Ablation beziehungsweise Materialabtrag und/oder Schwärzen und/oder Farbumschlag, bevorzugt lasersensitiver Schichten oder Bereiche des Bauteils und/oder des Grundkörpers, Kaltprägen, Heißprägen, Thermotransfer, vorzugsweise wobei diese Schritte insbesondere vor und/oder nach der Entformung des Bauteils und/oder des zumindest einen Grundkörpers und/oder des Bauteils umfassend den zumindest einen Grundkörper, bevorzugt vor und/oder nach dem Schritt d), weiter bevorzugt vor und/oder nach der Entformungsstation, und/oder insbesondere vor und/oder nach dem Überfluten, bevorzugt vor und/oder nach dem Schritt e), angeordnet sind.

Vorzugsweise wird beim Abprägen ein oder mehrerer Einlegeelemente der ein oder mehreren Einlegeelemente, insbesondere bei Verwendung einer Heißprägefolie, vorzugsweise ein durch die Formgebung des Prägewerkzeugs bestimmter Ausschnitt einer Transferlage unter Aktivierung einer Kleberschicht der Transferlage oder einer zwischen dem Grundkörper und der Transferlage vorgesehenen Kleberschicht als Einlegelement appliziert.

Weiter ist es vorteilhaft, insbesondere bei Einsatz einer Kaltprägefolie, auf die Trägerlage und/oder auf einen Teilbereich der Oberfläche des Grundkörpers eine Kleberschicht in einem dritten Bereich aufzubringen, in einem vierten Bereich jedoch nicht aufzubringen, mittels eines Prägewerkzeugs die Transferfolie gegen die Oberfläche des Grundkörpers zu führen, die Kleberschicht zu aktivieren und die Transferfolie wieder abzuziehen, insbesondere wobei ein durch die Formgebung des dritten Bereichs bestimmter Ausschnitt der Transferlage als Einlegeelement auf den Grundkörper appliziert wird. Das Aufbringen der Kleberschicht erfolgt hierbei vorzugsweise mittels eines digitalen Druckverfahrens, insbesondere mittels eines Inkjet-Druckkopfes.

Weiter ist es möglich, dass weitere Schritte nach dem Entformen beziehungsweise nach der Entformung des Bauteils und/oder des zumindest einen Grundkörpers und/oder des Bauteils umfassend den zumindest einen Grundkörper erfolgen, wobei ein oder mehrere der weiteren Schritte bevorzugt ausgewählt sind aus: Bestücken mit Funktionselementen, insbesondere Bestücken mit Leiterplatten und/oder elektronischen Bauelementen und/oder mechanischen Bauelementen und/oder Befestigungselementen, Beschichten, insbesondere Beschichten mit Kleber und/oder mit weiteren, bevorzugt unterschiedlichen, Funktionsschichten, Einbauen und/oder Anbauen an und/oder in weitere, insbesondere unterschiedliche, Körper und/oder Grundkörper, bevorzugt Körper aller Art.

Vorzugsweise werden vor dem Schritt a) ein oder mehrere weitere Einlegeelemente in die zumindest eine erste Spritzgusskavität eingebracht, insbesondere in die erste obere und/oder erste untere Werkzeugformhälfte eingelegt, werden, und in Schritt b) mit dem ersten Kunststoffmaterial hinterspritzt und/oder umspritzt.

Bevorzugt werden bei der Durchführung des Schritts a1) ein oder mehrere Einlegeelemente der ein oder mehreren Einlegeelemente registergenau zu ein oder mehreren weiteren Einlegeelemente der ein oder mehreren weiteren Einlegeelemente und/oder registergenau zu der Kontur der ersten oberen und/oder ersten unteren Werkzeugkavität eingelegt, insbesondere wobei ein oder mehrere Registermarken oder optische Merkmale der ein oder mehreren weiteren Einlegeelemente und/oder der ersten oberen und/oder ersten unteren Werkzeugkavitäten beziehungsweise Werkzeugformhälften erfasst werden und zur Steuerung des Einlegens verwendet werden.

Unter Register oder Passer bzw. Registergenauigkeit oder Registerhaltigkeit oder Passergenauigkeit oder Positionsgenauigkeit ist insbesondere eine Lagegenauigkeit zweier oder mehrerer Elemente und/oder Schichten relativ zueinander zu verstehen. Dabei soll sich die Registergenauigkeit bevorzugt innerhalb einer vorgegebenen Toleranz bewegen und dabei vorzugsweise möglichst hoch sein. Gleichzeitig ist die Registergenauigkeit von mehreren Elementen und/oder Schichten zueinander insbesondere ein wichtiges Merkmal, um die Prozesssicherheit zu erhöhen. Die lagegenaue Positionierung erfolgt dabei insbesondere mittels sensorischer, vorzugsweise optisch detektierbarer, Passermarken oder der Positionsmarkierungen. Insbesondere stellen diese Passermarken oder Positionsmarkierungen dabei entweder spezielle separate Elemente oder Bereiche oder Schichten dar oder sind selbst Teil der zu positionierenden Elemente oder Bereiche oder Schichten sein.

Vorzugsweise handelt es sich bei ein oder mehreren Einlegeelementen der ein oder mehreren Einlegeelemente und/oder bei ein oder mehreren weiteren Einlegeelementen der ein oder mehreren weiteren Einlegeelemente um eine vorzugsweise in teilflächiger Form, beispielsweise als "Label" ausgebildete Laminierfolie oder um ein sogenanntes "Insert" als ein insbesondere mit Dekorations- und/oder Funktionselementen versehenes, vorgeformtes Teilelement und/oder um ein Einlegeteil insbesondere als funktionelles Verstärkungs- oder Versteifungselement aus Metall und/oder Kunststoff und/oder um Faserverbundstoff und/oder Kunststoff mit Faserkomponenten und/oder um eine Transferfolie.

Es ist möglich, dass vor Durchführung des Schritts a), dem Schließen des Spritzgusswerkzeugs, ein oder mehrere Einlegeelemente der ein oder mehreren Einlegeelemente und/oder ein oder mehrere weitere Einlegeelemente der ein oder mehreren weiteren Einlegeelemente in die zumindest eine erste Spritzgusskavität eingebracht werden. Hierbei werden die ein oder mehreren Einlegeelemente der ein oder mehreren Einlegeelemente und/oder die ein oder mehreren weiteren Einlegeelemente der ein oder mehreren weiteren Einlegeelemente hierzu insbesondere in die erste untere und/oder erste obere Werkzeugformhälfte, bevorzugt als Einzelelemente, eingelegt und/oder in Form einer Folienbahn zugeführt.

Weiter ist es möglich, dass eine erste Gruppe von ein oder mehreren Einlegeelementen der ein oder mehreren Einlegeelemente und/oder ein oder mehrere weitere Einlegeelemente der ein oder mehreren weiteren Einlegeelemente in zumindest eine obere Werkzeugformhälfte und/oder Werkzeugkavität der zumindest einen oberen Werkzeugformhälfte und/oder Werkzeugkavität, insbesondere der ersten oberen Werkzeugformhälfte und/oder der ersten oberen Werkzeugkavität, eingelegt werden und/oder dass eine zweite Gruppe von ein oder mehreren Einlegeelementen der ein oder mehreren Einlegeelemente und/oder ein oder mehrere weitere Einlegeelemente der ein oder mehreren weiteren Einlegeelemente in zumindest eine untere Werkzeugformhälfte und/oder Werkzeugkavität der zumindest einen unteren Werkzeugformhälfte und/oder Werkzeugkavität, insbesondere der ersten unteren Werkzeugformhälfte und/oder der ersten unteren Werkzeugkavität, eingelegt werden.

Hierdurch ist es möglich, eine "beidseitige" Dekoration des zumindest einen Grundkörpers und/oder des Bauteils bzw. ein beidseitiges Versehen des Bauteils mit den gewünschten funktionellen Schichten zu erzielen. So wird beispielsweise die Unterseite des zumindest einen Grundkörpers und/oder des Bauteils von den ein oder mehreren Einlegeelementen und/oder weiteren Einlegeelementen der ersten Gruppe von Einlegeelementen und/oder weiteren Einlegeelementen gebildet und auf der Oberseite des zumindest einen Grundkörpers und/oder des Bauteils bilden die ein oder mehreren Einlegeelemente und/oder weiteren Einlegeelemente der zweiten Gruppe von Einlegeelementen und/oder weiteren Einlegeelementen die Oberseite des zumindest einen Grundkörpers und/oder des Bauteils aus.

Dabei kann das Bauteil und/oder der zumindest eine Grundkörper vorzugsweise opak oder transluzent oder transparent ausgebildet, insbesondere um unterschiedliche optische Erscheinungsbilder des Bauteils bereitzustellen.

Bevorzugt wird unter "opak" eine Transparenz, insbesondere im für den Menschen sichtbaren Wellenlängenbereich, von weniger als 50%, insbesondere von weniger als 20%, bevorzugt weniger als 5%, verstanden.

Bevorzugt wird unter "transparent" eine Transparenz, insbesondere im für den Menschen sichtbaren Wellenlängenbereich, von zumindest 50%, insbesondere von mehr als 50%, bevorzugt von mehr als 75%, verstanden.

Ist das Bauteil und/oder der zumindest eine Grundkörper beispielsweise transparent ausgebildet, kann die beidseitige Dekoration gemeinsam einen optischen Tiefeneffekt durch die Beabstandung beider Dekorationen durch die Wandstärke des Bauteils und/oder des zumindest einen Grundkörpers erzeugen. Hierzu wird vorzugsweise die Dicke des zumindest einen Grundkörpers so gewählt, dass die ein oder mehreren Einlegeelemente und/oder weiteren Einlegeelemente der ersten Gruppe von Einlegeelementen und/oder weiteren Einlegeelementen einerseits und die ein oder mehreren Einlegeelemente und/oder weiteren Einlegeelemente der zweiten Gruppe von Einlegeelementen und/oder weiteren Einlegeelementen andererseits derart voneinander beabstandet sind, dass ein optischer Tiefeneffekt durch Zusammenwirken der ein oder mehreren Einlegeelemente und/oder weiteren Einlegeelemente der ersten und/oder zweiten Gruppe von Einlegeelementen und/oder weiteren Einlegeelementen generiert wird.

Ist das Bauteil und/oder der zumindest eine Grundkörper beispielsweise opak ausgebildet, kann die beidseitige Dekoration durch die ein oder mehreren Einlegeelemente und/oder weiteren Einlegeelemente der ersten Gruppe von Einlegeelementen und/oder weiteren Einlegeelementen und/oder durch die ein oder mehreren Einlegeelemente und/oder weiteren Einlegeelemente der zweiten Gruppe von Einlegeelementen und/oder weiteren Einlegeelementen ein unterschiedliches optisches Erscheinungsbild des Bauteils und/oder des zumindest einen Grundkörpers von unterschiedlichen Seiten bereitstellen oder umgekehrt.

Durch die Verwendung von ein oder mehreren Einlegeelementen und/oder weiteren Einlegeelementen der ersten Gruppe von Einlegeelementen und/oder weiteren Einlegeelementen und/oder von ein oder mehreren Einlegeelementen und/oder weiteren Einlegeelementen der zweiten Gruppe von Einlegeelementen und/oder weiteren Einlegeelementen erfolgt insbesondere auch eine Kombination von dekorativen Folien und funktionellen Folien oder umgekehrt. Beispielsweise kann auf einer Seite des Bauteils und/oder des zumindest einen Grundkörpers eine Dekoration erfolgen und auf der anderen Seite des Bauteils und/oder des zumindest einen Grundkörpers eine Applikation eines Funktionselements, beispielsweise eines Touchsensors und/oder Leiterbahnen und/oder einer Antenne und/oder eines Displays erfolgen.

Dabei wird der Herstellungsprozess vorzugsweise derart ausgestaltet, dass ein oder mehrere erste Einlegeelemente der ein oder mehreren Einlegeelemente und/oder ein oder mehrere erste weitere Einlegeelemente der ein oder mehreren weiteren Einlegeelemente, welche bevorzugt beständiger gegenüber Druck und/oder Wärme sind, als ein oder mehrere zweite Einlegeelemente der ein oder mehreren Einlegeelemente und/oder ein oder mehrere zweite weitere Einlegeelemente der ein oder mehreren weiteren Einlegeelemente eingesetzt werden, oder umgekehrt, und die Einlegeelemente und/oder weiteren Einlegeelemente, welche insbesondere weniger beständig gegenüber Druck und/oder Wärme sind, als die ein oder mehreren zweiten Einlegeelemente und/oder zweiten weiteren Einlegeelemente eingesetzt werden, oder umgekehrt. In dieser Variante ist es möglich, dass ein oder mehrere dritte Einlegeelemente der ein oder mehreren Einlegeelemente und/oder ein oder mehrere dritte weitere Einlegeelemente der ein oder mehreren weiteren Einlegeelemente als ein oder mehrere funktionelle Elemente auf das Bauteil und/oder den zumindest einen Grundkörper appliziert werden und ein oder mehrere vierte Einlegeelemente der ein oder mehreren Einlegeelemente und/oder ein oder mehrere vierte weitere Einlegeelemente der ein oder mehreren weiteren Einlegeelemente als ein oder mehrere dekorative Elemente auf das Bauteil appliziert werden oder umgekehrt.

Vorzugsweise ist der Herstellungsprozess hierbei alternativ dazu auch derart ausgestaltet, dass ein oder mehrere fünfte Einlegeelemente der ein oder mehreren Einlegeelemente und/oder ein oder mehrere fünfte weitere Einlegeelemente der ein oder mehreren weiteren Einlegeelemente als ein oder mehrere funktionelle Elemente auf das Bauteil und/oder den zumindest einen Grundkörper appliziert werden und ein oder mehrere sechste Einlegeelemente der ein oder mehreren Einlegeelemente und/oder ein oder mehrere sechste weitere Einlegeelemente der ein oder mehreren weiteren Einlegeelemente als ein oder mehrere dekorative Elemente auf das Bauteil und/oder den zumindest einen Grundkörper appliziert werden oder umgekehrt.

Es ist möglich, dass die ersten, zweiten, dritten, vierten, fünften und/oder sechsten Einlegeelemente und/oder weiteren Einlegeelemente und/oder die erste und/oder die zweite Gruppe der Einlegeelemente und/oder weiteren Einlegeelemente identisch oder unterschiedlich zueinander sind.

Besonders vorteilhaft ist hierbei möglich, dass durch das Verfahren die ein oder mehreren ersten, zweiten, dritten, vierten, fünften und/oder sechsten Einlegeelemente und/oder weiteren Einlegeelemente und/oder die erste und/oder die zweite Gruppe der Einlegeelemente und/oder weiteren Einlegeelemente vorzugsweise besonders registergenau relativ zueinander angeordnet werden. Dies, da sowohl beim Hinterspritzen der ersten, zweiten, dritten, vierten, fünften und/oder sechsten Einlegeelemente und/oder weiteren Einlegeelemente und/oder die erste und/oder die zweite Gruppe der Einlegeelemente und/oder weiteren Einlegeelemente, als auch beim Überfluten und/oder Abprägen der ersten, zweiten, dritten, vierten, fünften und/oder sechsten Einlegeelemente und/oder weiteren Einlegeelemente der zumindest eine Grundkörper und/oder das Bauteil durch die zumindest eine obere und/oder untere Werkzeugkavität der zumindest einen oberen und/oder unteren Werkzeugformhälfte, insbesondere durch die erste obere und/oder untere Werkzeugkavität der ersten oberen und/oder unteren Werkzeugformhälfte festgelegt ist und somit diesbezüglich kein weiterer Registrierungsschritt mehr zu erfolgen hat.

Insbesondere wird zwischen den Schritten d) und e) oder nach dem Schritt e) folgender Schritt durchgeführt:
f) Aufbringen zumindest einer zweiten Deckschicht auf zumindest einen Teilbereich der Oberfläche des zumindest einen Grundkörpers.

Insbesondere besteht die zumindest eine zweite Deckschicht aus einem dritten Kunststoffmaterial.

Vorzugsweise werden weiter, insbesondere bei der Durchführung des Schritts f), bevorzugt dem Einlegen der ein oder mehreren Einlegeelemente, ein oder mehrere Einlegeelemente der ein oder mehreren Einlegeelemente registergenau zu ein oder mehreren weiteren Einlegeelementen der ein oder mehreren weiteren Einlegeelemente eingelegt und/oder überflutet. Hierzu ist es vorteilhaft, ein oder mehrere Registermarken und/oder optischen Merkmale der ein oder mehreren weiteren Einlegeelemente und/oder der ersten oberen und/oder unteren Werkzeugformhälfte und/oder der ersten oberen und/oder unteren Werkzeugkavität zu erfassen und diese zur Steuerung des Einlegens und/oder Überflutens zu verwenden. Zusätzlich können entsprechende Registermarken und/oder optische Merkmale der Einlegeelemente und/oder weiteren Einlegeelemente erfasst werden, welche beim Einlegen und/oder Überfluten der ein oder mehreren Einlegeelemente und/oder weiteren Einlegeelemente, wie oben dargelegt, eingesetzt werden.

Insbesondere werden ein oder mehrere Einlegeelemente der ein oder mehreren Einlegeelemente und/oder ein oder mehreren weitere Einlegeelementen der ein oder mehreren weiteren Einlegeelemente, vorzugsweise in dem Schritt b), mit dem ersten, zweiten und/oder dritten Kunststoffmaterial hinterspritzt und/oder angespritzt und/oder umspritzt.

Weiter ist es möglich, dass die ein oder mehreren Einlegeelemente und/oder die ein oder mehreren weiteren Einlegeelemente jeweils zumindest eine Dekorschicht und/oder zumindest eine funktionelle Schicht, insbesondere eine Schicht mit einer elektrischen Funktionalität, insbesondere umfassend ein oder mehrere Elemente ausgewählt aus Touchsensor, Antenne, Kondensator, Spule, elektromagnetische Abschirmung, elektrisch nicht leitfähige, metallische Schichten, insbesondere zur Vermeidung elektrostatischer Aufladung, Display, LED, elektrische Schaltung, Solarzelle, zumindest eine insbesondere nachhärtbare Schutzschicht und/oder zumindest eine Barriereschicht und/oder zumindest eine Haftvermittlungsschicht beziehungsweise Haftvermittlerschicht aufweisen.

Vorzugsweise besteht zumindest eine Dekorschicht der zumindest einen Dekorschicht hierbei aus einer oder mehrerer oder einer Kombination aus ein oder mehreren Dekorschichten der folgenden Dekorschichten:
- Transparente oder transluzente oder opake Lackschicht enthaltend Farbstoffe und/oder Pigmente, insbesondere organische/anorganische Pigmente, lumineszente und/oder fluoreszente Pigmente und/oder Farbstoffe, optisch variable Pigmente, thermochrome Pigmente und/oder Farbstoffe, metallische Pigmente, magnetisch ausrichtbare Pigmente,
- Volumenhologrammschicht,
- Schicht mit optisch aktivem Oberflächenrelief, insbesondere einem diffraktiven und/oder refraktiv wirkenden Oberflächenrelief, einem holografischen Oberflächenrelief, einem Oberflächenrelief enthaltend refraktive Strukturen, diffraktive Strukturen, insbesondere Linsenstrukturen, Mikrolinsenanordnungen, Mikroprismen, Mikrospiegel, Mattstrukturen, insbesondere isotrope und/oder anisotrope Mattstrukturen und/oder eine Kombination beliebiger derartiger Strukturen;
- Reflexionsschichten, insbesondere metallische oder dielektrische Reflexionsschichten;
- hochbrechende oder niedrigbrechende Schichten, insbesondere mit Brechungsindizes, die sich um mehr als +/- 0,2 von einem Brechungsindex von 1,5 unterscheiden;
- Flüssigkristallschichten, insbesondere cholesterische und/oder nematische Flüssigkristallschichten;
- Dünnfilmschichten, welche einen optisch variablen Farbänderungseffekt zeigen, insbesondere umfassend eine Absorberschicht, eine dielektrische Abstandsschicht und eine optionale Reflexionsschicht oder alternativ umfassend eine mehrfache Abfolge von abwechselnden hochbrechenden und niedrigbrechenden transparenten Schichten.

Es ist möglich, dass diese Dekorschichten hierbei in beliebiger Abfolge aufeinander und/oder nebeneinander aufgebracht sind. Insbesondere ist jede einzelne Dekorschicht hierbei teilflächig in Musterform ausgebildet, um bevorzugt ein gewünschtes grafisches Dekor zu erzielen. Die Dekorschichten sind vorzugsweise relativ zueinander im Register angeordnet.

Zumindest eine funktionelle Schicht der zumindest einen funktionellen Schicht besteht vorzugsweise aus einer oder mehrerer oder einer Kombination aus ein oder mehreren funktionellen Schichten der im Folgenden angeführten funktionellen Schichten:
- Schichten mit einer elektrischen Funktionalität, insbesondere umfassend ein oder mehrere Elemente ausgewählt aus: Touchsensor, Antenne, elektromagnetische Abschirmung, elektrisch nicht leitfähige, metallische Schichten zur Vermeidung elektrostatischer Aufladung, Display, LED (LED = Light Emitting Diode), elektrische Schaltung, Solarzelle, Schicht mit einer magnetischen Funktionalität, beispielsweise einem magnetischen Barcode, Schichten mit mechanischer Funktionalität, beispielsweise Verstärkungselemente oder Versteifungselemente aus Metall und/oder Kunststoff und/oder gewebte und/oder ungewebte Faserlagen und/oder faserige Zuschlagstoffe und/oder faserige Zusatzschichten, Schichten mit optischer Funktionalität, beispielsweise Antireflexionsschichten oder Reflexionsschichten, Schichten mit taktiler Funktionalität, beispielsweise Softtouch-Oberflächenbeschichtungen.

Auch ist es weiter möglich, dass die erste obere und/oder erste untere Werkzeugformhälfte zwischen der Durchführung der Schritte a1) und b), der Schritte a) und b) und/oder der Schritte d) und e) gedreht und/oder verschoben und/oder verfahren wird.

Erfindungsgemäß werden ein zweites oberes Werkzeugmodul der zumindest zwei oberen Werkzeugmodule des zumindest einen oberen Werkzeugträgers und das erste untere Werkzeugmodul des zumindest einen unteren Werkzeugmoduls des zumindest einen zweiten Werkzeugträgers in der zumindest einen vorbestimmten Position derart kombiniert, dass ein oder mehrere Arbeitsstationen der ein oder mehreren Arbeitsstationen als Überflutungsstation umfassend das zweite obere Werkzeugmodul und das erste untere Werkzeugmodul ausgebildet ist, insbesondere wobei das zweite obere Werkzeugmodul eine erste obere Überflutungshälfte ist und/oder das erste untere Werkzeugmodul die zweite Werkzeugformhälfte mit der zweiten Werkzeugkavität ist.

Hierbei ist es besonders vorteilhaft, die zumindest eine zweite Deckschicht derart aufzubringen, dass die ein oder mehreren Einlegeelemente zwischen dem zumindest einen Grundkörper und der zumindest einen zweiten Deckschicht eingekapselt sind. Durch diese Einkapselung ist es möglich, die Einlegeelemente entsprechend gut vor Umwelteinflüssen zu schützen oder durch die hierdurch bewirkten Interaktionen besonders vorteilhafte optische und/oder funktionelle Effekte zu erzielen.

Insbesondere ist es möglich, dass die zumindest eine erste Deckschicht, vorzugsweise gemäß Schritt e), auf zumindest einen Teilbereich der Oberfläche des zumindest einen Grundkörpers aufgebracht, aber keine zweite Deckschicht, vorzugsweise gemäß dem Schritt f), auf den zumindest einen Teilbereich der Oberfläche des zumindest einen Grundkörpers aufgebracht wird oder umgekehrt.

Vorzugsweise wird die zumindest eine erste Deckschicht, bevorzugt gemäß Schritt e), auf ein oder mehrere erste Teilbereiche der Oberfläche des zumindest einen Grundkörpers aufgebracht und die zumindest eine zweite Deckschicht, bevorzugt gemäß Schritt f), auf ein oder mehrere zweite Teilebereiche der Oberfläche des zumindest einen Grundkörpers aufgebracht, insbesondere wobei die zumindest eine erste Deckschicht in den ersten Teilbereichen und die zumindest eine zweite Deckschicht in den zweiten Teilbereichen im Register zueinander angeordnet sind.

Weiter ist es möglich, dass die zumindest eine erste Deckschicht und die zumindest eine zweite Deckschicht in den ersten Teilbereichen beziehungsweise zweiten Teilbereichen unterschiedliche Eigenschaften aufweisen, insbesondere wobei ein oder mehrere der Eigenschaften oder Kombinationen aus ein oder mehreren Eigenschaften ausgewählt sind aus: Farbe, Muster, Motiv, Reliefstruktur, insbesondere diffraktiv wirkende Reliefstruktur, optische Elemente, insbesondere optisch variable Elemente, Glanzgrade.

Es ist möglich, dass in dem Schritt f) die zumindest eine zweite Deckschicht mittels der Überflutungsstation derart aufgebracht wird, dass ein oder mehrere Einlegeelemente der ein oder mehreren Einlegeelemente zwischen dem zumindest einen Grundkörper und der zumindest einen zweiten Deckschicht zumindest teilweise eingekapselt sind, insbesondere wobei in Schritt f) die zumindest eine zweite Deckschicht mittels der Überflutungsstation derart aufgebracht wird, dass die zumindest eine zweite Deckschicht die ein oder mehreren Einlegeelemente und/oder den zumindest einen ersten Teilbereich der Oberfläche des Grundkörpers lediglich teilflächig oder vollständig überlappt.

Vorzugsweise verbleibt bei sämtlichen dieser Schritte der zumindest eine Grundkörper konturfolgend in der ersten unteren Werkzeugkavität der ersten unteren Werkzeughälfte. Hierdurch wird zum einen eine entsprechend hohe Spritzguss- und Überflutungsqualität auch für die weiteren Spritzguss- und/oder Überflutungsschritte sichergestellt, und im Weiteren auch eine besonders gute Registerhaltigkeit der aufgebrachten ein oder mehreren Einlegeelemente und/oder der ein oder mehreren weiteren Einlegeelemente, sowie der zumindest einen ersten und/oder zweiten Deckschicht erzielt. Hierdurch wird die Registerhaltigkeit der aufgebrachten Einlegeelemente und/oder weiteren Einlegeelemente und/oder ersten und/oder zweiten Deckschichten und damit die Produktqualität weiter deutlich verbessert und der Ausschuss entsprechend verringert.

Weiter ist es möglich, dass die zumindest eine erste und/oder zweite Deckschicht derart aufgebracht wird, dass die zumindest eine erste und/oder zweite Deckschicht die ein oder mehreren Einlegeelemente und/oder den zumindest einen, insbesondere ersten und/oder zweiten, Teilbereich der Oberfläche des zumindest einen Grundkörpers lediglich teilflächig überlappt. Diese teilflächige Überlappung kann im Weiteren auch im Register zu den ein oder mehreren Einlegeelementen und/oder dem zumindest einen, insbesondere ersten und/oder zweiten, Teilbereichen der Oberfläche des zumindest einen Grundkörpers erfolgen, um so entsprechend registerhaltig durch die zumindest einen ersten und/oder zweiten Deckschichten funktionelle und/oder dekorative Elemente zu schaffen, welche entsprechend mit dekorativen Elementen und/oder Funktionen der ein oder mehreren Einlegeelemente zusammenwirken und/oder diese ergänzen.

Auch ist es weiter möglich, dass die zumindest eine erste und/oder zweite Deckschicht derart aufgebracht wird, dass die zumindest eine erste und/oder zweite Deckschicht die ein oder mehreren Einlegeelemente und/oder den zumindest einen, insbesondere ersten und/oder zweiten, Teilbereich der Oberfläche des zumindest einen Grundkörpers vollständig überlappt. Hierdurch lässt sich beispielsweise zumindest eine entsprechend geschlossene Schutzschicht oder Dekorschicht in dem entsprechenden zumindest einen, insbesondere erste und/oder zweiten, Teilbereichen der Oberfläche des zumindest einen Grundkörpers und/oder des Bauteils schaffen, welcher beispielsweise die der Witterung ausgesetzte Außenseite zumindest einen Grundkörpers und/oder des Bauteils ausbilden soll.

Weiter ist es möglich, dass vor und/oder während und/oder nach dem Aufbringen der zumindest einen zweiten Deckschicht in Schritt c), insbesondere mittels der Überflutungsstation, die zumindest eine zweite Deckschicht modifiziert und/oder strukturiert wird, vorzugsweise durch Einlegen/Auflegen von Partikeln auf zumindest einen Teilbereich der Oberfläche des zumindest einen Grundkörpers und/oder nach Schritt b) und/oder durch Verwendung von Werkzeugstrukturen während des Aufbringens in Schritt f) und/oder durch nachträgliches Lasern, Überdrucken und/oder Überprägen der zumindest einen zweiten Deckschicht.

Das Überfluten beziehungsweise Übergießen zumindest eines Teilbereichs der Oberfläche des zumindest einen Grundkörpers und/oder des Bauteils erlaubt vorzugsweise die Verwendung einer großen Anzahl von verschiedenen lösungsmittelhaltigen, vorzugsweise fließfähigen, polyurethanhaltigen Zusammensetzungen, welche beispielsweise spezifisch auf die Zusammensetzung des zumindest einen ersten, zweiten und/oder dritten Kunststoffmaterials des zumindest einen Grundkörpers und/oder des Bauteils und/oder auf die von der zumindest einen ersten und/oder zweiten Deckschicht zu erfüllenden Eigenschaften, beispielsweise hinsichtlich optischer Eigenschaften, mechanischer Eigenschaften und/oder chemischer Beständigkeit, abgestimmt werden können.

Es ist möglich, dass das Aufbringen zumindest einer ersten und/oder zweiten Deckschicht der zumindest einen ersten und/oder zweiten Deckschicht auf zumindest einen Teilbereich der Oberfläche des zumindest einen Grundkörpers und/oder des Bauteils, insbesondere nach Schritt e) und/oder f), vorzugsweise wobei der zumindest eine Teilbereich der Oberfläche des zumindest einen Grundkörpers und/oder des Bauteils zumindest bereichsweise noch nicht vollständig ausgehärtet ist und insbesondere wobei das Aufbringen der zumindest einen ersten und/oder zweiten Deckschicht auf den zumindest einen Teilbereich der Oberfläche des zumindest einen Grundkörpers und/oder des Bauteils durch zumindest teilweises Überfluten und/oder Übergießen mit zumindest einer lösungsmittelhaltigen, vorzugsweise fließfähigen, polyurethanhaltigen Zusammensetzung und nachfolgendem Härten, vorzugsweise bei einer Temperatur aus einem Bereich von 25°C bis 180°C, erfolgt. Insbesondere weist die zumindest eine lösungsmittelhaltige, vorzugsweise fließfähige, polyurethanhaltige Zusammensetzung zumindest ein organisches Lösungsmittel, beispielsweise Ethylacetat, 2-Butanon, Aceton, Toluol, Xylole oder Mischungen davon, auf.

Weiter ist es möglich, dass das Aufbringen zumindest einer ersten und/oder zweiten Deckschicht der zumindest einen ersten und/oder zweiten Deckschicht auf zumindest einen Teilbereich der Oberfläche des zumindest einen Grundkörpers und/oder des Bauteils, insbesondere nach Schritt e) und/oder f), erfolgt, wobei der Teilbereich der Oberfläche des zumindest einen Grundkörpers und/oder des Bauteils vorzugsweise aus ein oder mehreren Elementen aus der Gruppe, die aus Papier, Kunststoff, Holz, Composite, Glas, Metall und Kombinationen davon besteht, besteht.

Insbesondere ist es möglich, ein oder mehrere Einlegeelemente der ein oder mehreren Einlegeelemente und/oder ein oder mehrere weitere Einlegeelemente der ein oder mehreren Einlegeelemente und/oder zumindest ein Teilbereich der Oberfläche des zumindest einen Grundkörpers in einem weiteren Schritt, welcher insbesondere zwischen einem der Schritte a) bis d) oder nach dem Schritt d) durchgeführt wird, vorzugsweise mittels Abrollprägen, partiellem Abrollprägen oder Hubprägen, beprägt wird. Weiter ist es auch möglich, hierzu entsprechende Prägeverfahren einzusetzen.

Das Abprägen der ein oder mehreren Einlegeelemente und/oder ein oder mehreren weiteren Einlegeelemente wird vorzugsweise mit einem Prägewerkzeug oder mehreren Prägewerkzeugen durchgeführt, welche eine Folie oder ein/oder mehrere Abschnitte einer Folie als Einlegeelemente und/oder weitere Einlegeelemente auf zumindest einen freiliegenden Teilbereich oder zumindest einen, insbesondere ersten und/oder zweiten, bevorzugt freiliegenden, Teilbereich des zumindest einen, insbesondere ersten und/oder zweiten, Teilbereichs der Oberfläche des zumindest einen Grundkörpers applizieren. Bei den Prägewerkzeugen handelt es sich hierbei vorzugsweise um Prägestempel oder Prägewalzen, welche insbesondere gegebenenfalls auch entsprechend an die Formgebung des zumindest einen Grundkörpers angepasst sind oder in ihrer Führung und in ihrem Abrollverhalten eine entsprechende Konturfolge bezüglich der Oberflächenkontur des, insbesondere ersten und/oder zweiten, Teilbereichs der Oberfläche des zumindest einen Grundkörpers ermöglichen bzw. an diese angepasst sind. Derartige Prägestempel und Prägewalzen weisen jeweils vorzugsweise einen elastomeren Grundkörper oder elastomere Schichten, beispielsweise aus Silikon, auf.

Als Einlegeelemente und/oder weitere Einlegeelemente kommen bei der Durchführung des Schritts a1) insbesondere Transferfolien, beispielsweise Heißprägefolien oder Kaltprägefolien, aber auch Laminierfolien, in Frage.

Besonders geeignet für den Einsatz sind hierbei Transferfolien, welche eine Trägerlage und eine von dieser ablösbare Transferlage umfassen. Die Trägerlage besteht hierbei vorzugsweise aus einer Kunststofffolie, beispielsweise eine PET-Folie mit einer Dicke zwischen 10 µm und 250 µm. Die Transferlage weist hierbei eine oder mehrere Schichten auf, welche vorzugsweise ausgewählt sind aus: einer oder mehreren Dekorschichten, einer oder mehreren funktionellen Schichten, einer oder mehreren Schutzschichten, einer oder mehreren Haftvermittlungsschichten, einer oder mehreren Barriereschichten, einer oder mehreren leitfähigen Schichten.

Weiter ist es vorteilhaft, wenn zwischen der Trägerlage und der Transferlage eine oder mehrere Ablöseschichten angeordnet sind, welche die Ablösbarkeit verbessern. Derartige Schichten enthalten vorzugsweise Wachse und/oder Silikone und/oder Polymeren.

Falls eine derartige Transferfolie als Prägefolie ausgestaltet ist, weist diese vorzugsweise an der der Trägerlage abgewandten Seite der Transferfolie eine thermisch aktivierbare Kleberschicht auf, welche insbesondere durch die thermische Energie des Prägewerkzeugs aktiviert werden kann.

Weiter ist es auch möglich, dass die Transferlage der Transferfolie weiter beispielsweise mittels Stanzen oder Schneiden oder Lasereinwirkung eingebrachte Ausnehmungen aufweist oder die Transferlage in Form von Patches auf der Trägerlage vorgesehen ist. Derartige Transferlagen weisen weiter vorzugsweise auch noch eine oder mehrere Trägerfolien zur Stabilisierung der Transferlage auf. Hierdurch ergibt sich weiter der Vorteil, dass "sensible" Funktions- und Dekorschichten einen zusätzlichen Schutz vor den thermischen und mechanischen Belastungen des Prägeprozesses bzw. den nachfolgenden Prozessschritten erhalten.

Laminierfolien weisen vorzugsweise nicht eine "ablösbare" Trägerlage auf. Laminierfolien weisen vorzugsweise eine oder mehrere der folgenden Schichten auf: eine oder mehrere Dekorschichten, eine oder mehrere funktionelle Schichten, eine oder mehrere Schutzschichten und/oder Deckschichten, eine oder mehrere Trägerschichten, eine oder mehrere Haftvermittlerschichten, eine oder mehrere Trägerfolien, eine oder mehrere Barriereschichten, eine oder mehrere leitfähige Schichten.

Vorzugsweise weisen die Laminierfolien hierbei insbesondere durch Stanzen und/oder Schneiden und/oder Lasereinwirkung eingebrachte Ausnehmungen auf oder werden bereits beim Abprägen in Form von freigestellten, insbesondere freigestanzten, Einzelelementen auf einer Trägerschicht dem Prägeprozess zugeführt.

Es ist auch möglich, dass das erste, zweite und/oder dritte Kunststoffmaterial aus einem thermoplastischen Kunststoffmaterial, aus einem durch Vernetzung aushärtenden Kunststoffmaterial, insbesondere einem Zweikomponentenmaterial (2K = Zweikomponenten) und/oder aus einem thermisch und/oder aus einem durch Strahlung härtbaren Material, und/oder aus einer Mischung derartiger Kunststoffmaterialien besteht und/oder wobei dass das erste, zweite und/oder dritte Kunststoffmaterial, insbesondere durch Bestrahlung, vollständig oder teilweise ausgehärtet wird.

Besonders vorteilhaft besteht das erste, zweite und/oder dritte Kunststoffmaterial aus einem Zweikomponentenkunststoff, welcher beim Einspritzen der zwei Komponenten in die zumindest eine erste und/oder zweite Spritzgusskavität in einem Mischkopf gemischt wird, sodass ein Gemisch in die entsprechenden Spritzgusskavitäten gelangt. Die Reaktion des Gemisches findet in den entsprechenden Spritzgusskavitäten statt und kann auch noch nach Öffnen der Werkzeugformhälften weiter ablaufen. Mittels des Einsatzes derartiger Materialien ist es möglich, zumindest eine besonders harte und witterungsbeständige erste und/oder zweite Deckschicht zu erzielen.

Weiter ist es auch möglich, dass das erste, zweite und/oder dritte Kunststoffmaterial in einem späteren Schritt oder mehreren späteren Schritten nachgehärtet oder ausgehärtet wird. Eine derartige Nachhärtung oder Aushärtung kann beispielsweise mittels Bestrahlung, insbesondere mittels aktinischer Strahlung, bevorzugt UV-Bestrahlung und/oder Elektronenstrahlhärtung, erfolgen.

Besonders vorteilhaft ist es, den Schritt der Aufbringung der zumindest einen ersten und/oder zweiten Deckschicht aus dem ersten, zweiten und/oder dritten Kunststoffmaterial, insbesondere durch Überspritzen, Überfluten und Spritzgießen, mehrfach zu wiederholen. Hierbei können in den aufeinanderfolgenden Schritten weiter auch unterschiedliche erste, zweite und/oder dritte Kunststoffmaterialen und/oder unterschiedliche dritte Werkzeugformhälften eingesetzt werden, so dass entsprechende, sich bezüglich ihrer Ausformung und/oder ihrem Material unterscheidende erste und/oder zweite Deckschichten aufeinander aufgebracht werden. Weiter ist es hierbei auch möglich, den Schritt a1), das Einlegen der ein oder mehreren Einlegeelemente, jeweils zusätzlich noch ein- oder mehrfach nach dem jeweiligen Aufbringen der ersten und/oder zweiten Deckschicht durchzuführen. Es ist so beispielsweise möglich, nach Aufbringen einer ersten und/oder zweiten Deckschicht, nochmals den Schritt a1) und/oder e) und/oder f) durchzuführen, hierauf dann nochmals eine weitere Deckschicht, gegebenenfalls in unterschiedlicher Ausformung und/oder aus unterschiedlichem Material, aufzubringen, hierauf nochmals ein oder mehrere Einlegeelemente der ein oder mehreren Einlegeelemente einzulegen und so weiter. Hierdurch wird ermöglicht, entsprechend komplexe dekorative und/oder funktionelle Funktionen in dem Bauteil und/oder in dem zumindest einen Grundkörper kostengünstig zu realisieren.

Vorzugsweise besteht das erste, zweite und/oder dritte Kunststoffmaterial aus Polyurethan oder Polyurea und das erste, zweite und/oder dritte Kunststoffmaterial aus einem Thermoplast, insbesondere aus ABS, ASA, ABS-PC, PC-PBT und/oder ASA-PC und/oder dass die Zusammensetzung des ersten, zweiten und/oder dritten Kunststoffmaterials aus der Gruppe, die aus polyurethanhaltigen Dispersionen, polyurethanhaltigen Harzen, Polyurethan-Lösungen, Zusammensetzungen aus Polyurethan-Vorläufern (2K-PUR Systemen) und Mischungen davon, ausgewählt wird.

Es ist auch möglich, dass das erste, zweite und/oder dritte Kunststoffmaterial vorzugweise aus einem Thermoplast, insbesondere aus einem schlagzähen Thermoplast, aus Polyäthylen (PE), Polycarbonat (PC), Polypropylen (PP), Polystyrol, Polybutadien, Polynitrile, Polyester, Polyurethane, Polymethacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), ABS-PC, PET-PC, PBT-PC, PC-PBT und/oder ASA-PC und/oder Copolymeren oder Gemischen davon besteht. Das erste, zweite und/oder dritte Kunststoffmaterial enthält vorzugsweise weiter grundsätzlich noch anorganische oder organische Füllstoffe, bevorzugt SiO₂, Al₂O₃, TiO₂, Tonmineralien, Silikate, Zeolithe, Glasfasern, Kohlenstofffasern, Glaskugeln, organische Fasern oder Gemischen davon. Die Füllstoffe werden hierbei insbesondere dem ersten, zweiten und/oder dritten Kunststoffmaterial zugemischt, um die Stabilität des zumindest einen Grundkörpers und/oder des Bauteils weiter zu erhöhen. Insbesondere verringern diese Füllstoffe den Anteil an polymeren Materialien und vermindern hierdurch die Herstellungskosten und/oder das Gewicht des zumindest einen Grundkörpers und/oder des Bauteils.

Weiter ist es auch möglich, dass sich das erste, zweite und/oder dritte Kunststoffmaterial insbesondere gleich oder unterschiedlich sind.

Vorzugsweise wird die Dicke der zumindest einen ersten und/oder zweiten Deckschicht vorzugsweise aus einem Bereich zwischen 100 µm und 20000 µm, insbesondere 100 µm bis 10000 µm, bevorzugt zwischen 200 µm und 5000 µm, gewählt.

Vorzugsweise haftet die zumindest eine erste und/oder zweite Deckschicht auf dem zumindest einen Grundkörper und/oder dem Bauteil, insbesondere auf zumindest einen Teilbereich des zumindest einen Grundkörpers und/oder des Bauteils, bevorzugt nach dem Aushärten mit einer Haftkraft, bestimmt gemäß der in DIN EN ISO 4624: 2016-08 beschriebenen Methode, vorzugsweise mit einem Haftzugprüfgerät PosiTest^{®} AT Serie der Fa. DeFelsko Corporation (Ogdensburg, NY, USA) unter Verwendung eines 20 mm-Prüfstempels, aus einem Bereich von 2,5 MPa bis 5 MPa, insbesondere von 2,5 MPa bis 10 MPa. Hierbei ist es möglich, dass die zumindest eine erste und/oder zweite Deckschicht nach dem Aushärten nicht ohne Beschädigung von dem zumindest einen Grundkörper und/oder dem Bauteil, insbesondere auf zumindest einen Teilbereich des zumindest einen Grundkörpers und/oder des Bauteils, abgelöst werden kann.

Weiter ist es auch möglich, dass der Schritt e) mehrfach mit unterschiedlichen ersten und/oder zweiten und/oder dritten Kunststoffmaterialien und/oder unterschiedlichen weiteren oberen und/oder unteren Werkzeugformhälften und/oder weiteren oberen und/oder unteren Werkzeugkavitäten durchgeführt wird.

Neben der Durchführung der oben beschriebenen Schritte ist es weiter vorteilhaft, einen oder mehrere der folgenden Schritte, auch mehrfach, bei der Herstellung des Bauteils und/oder des zumindest einen Grundkörpers durchzuführen:
Vorzugsweise erfolgt eine Vorbehandlung zumindest eines Teilbereichs, insbesondere eines freiliegenden Teilbereichs, der Oberfläche des zumindest einen Grundkörpers und/oder der ein oder mehreren Einlegeelemente und/oder weiteren Einlegeelemente. Diese Vorbehandlung wird so vorzugsweise zwischen den Schritten c) und d) und/oder zwischen dem Schritt d) und dem Aufbringen der zumindest einen ersten und/oder zweiten Deckschicht, insbesondere dem Schritten e) und/oder f), durchgeführt. Falls noch weitere Überflutungen durchgeführt werden und/oder mehrfach eine erste und/oder zweite Deckschicht aufgebracht wird, wie oben ausgeführt, wird eine derartige Vorbehandlung vorzugsweise auch vor Durchführung dieser jeweiligen Schritte durchgeführt.

Als Vorbehandlung werden vorzugsweise eines oder mehrere der folgenden Bearbeitungsverfahren durchgeführt: Oberflächenaktivierung, insbesondere durch Begasen, Beflammung, Plasmabehandlung, Fluorierung, Bestrahlung, Reinigung, Beschichtung.

Besonders vorteilhaft ist hier, dass, aufgrund der zeitlichen "Nähe" der Vorbehandlung sowohl zum vorgelagerten Spritzgießprozess als auch zum nachgelagerten Überflutungsprozess die vorbehandelte Oberfläche besonders "zugänglich" für die durchgeführten Bearbeitungsverfahren ist und eine Degeneration - durch die zeitliche Nähe - weitgehend vermieden wird. Damit wird die Effektivität der Vorbehandlung deutlich erhöht, und beispielsweise die Hafteigenschaften zwischen dem zumindest einen Grundkörper und den ein oder mehreren Einlegeelementen und/oder weiteren Einlegeelemente und/oder der zumindest einen ersten und/oder zweiten Deckschicht verbessert.

Vorzugsweise wird eine optische Prüfung zumindest eines Teilbereichs der Oberfläche des zumindest einen Grundkörpers und/oder der ein oder mehreren Einlegeelemente und/oder weiteren Einlegeelemente und/oder des Bauteils durchgeführt. Diese erfolgt insbesondere mittels eines optischen Sensors, beispielsweise einer Kamera, beispielsweise umfassend einen CCD-Chip (CCD = "Charged Coupled Device") und/oder einen TES-Sensor (TES = "Transition Edge Sensor"): Eine derartige optische Prüfung wird hierbei vorzugsweise unter Einsatz von Bildverarbeitungsverfahren durchgeführt und kann beispielsweise dazu verwendet werden, um Prozessparameter beispielsweise durch Einbindung in einen entsprechenden Regelkreis zu optimieren, um so die Ausschussraten weiter zu verringern. Weiter kann diese optische Prüfung auch zur Qualitätssicherung eingesetzt werden. Diese optische Prüfung kann mehrfach zu unterschiedlichen Zeitpunkten des Prozesses stattfinden, beispielsweise nach dem Spritzgussvorgang und/oder nach dem Überflutungsvorgang und/oder nach der Vorbehandlung und/oder nach der Applikation der einen oder mehreren Einlegeelemente und/oder weiteren Einlegeelemente und/oder nach der weiteren Beschichtung, Überflutung, Überspritzung und/oder nach einem Reinigungsprozess und/oder nach der Entnahme des Bauteils aus der ersten oberen und/oder unteren Werkzeugkavität und/oder aus den oberen und/oder unteren Werkzeugkavitäten.

Vorzugsweise wird insbesondere nach der Durchführung des Schritts a1) und/oder e) und/oder f), dem Applizieren der ein oder mehreren Einlegeelemente und/oder weiteren Einlegeelemente beziehungsweise dem Aufbringen zumindest einer ersten und/oder zweiten Deckschicht, und/oder nach Durchführung des Schritts e) und/oder f), bei dem die zumindest eine erste und/oder die zweite Deckschicht aufgebracht wird, ein Reinigungsprozess durchgeführt. Durch diesen Prozess wird beispielsweise die freiliegende Oberfläche von Abfallprodukten des Spritzguss- und/oder Überflutungsprozesses gereinigt. Vorzugsweise wird hier der Reinigungsprozess durchgeführt, so lange sich der zumindest eine Grundkörper noch in der ersten oberen und/oder unteren Werkzeugformhälfte und/oder der ersten oberen und/oder unteren Werkzeugkavität befindet. Hierdurch wird der zumindest eine Grundkörper bei der Durchführung der Reinigung sicher fixiert, so dass auch Reinigungsverfahren eingesetzt werden können, welche eine stabile Fixierung des zu reinigenden Produkts erfordern.

Vorzugsweise erfolgt hierbei die Reinigung mittels Bürsten und/oder Druckluft und/oder Absaugung.

Vorzugsweise wird die erste Werkzeugformhälfte zwischen der Durchführung der Schritte b) und a1) und/oder a1) und e) und/oder a1) und f), dem Spritzen des zumindest einen Grundkörpers und dem Einlegen der ein oder mehreren Einlegeelemente und/oder weiteren Einlegeelemente, gedreht und/oder verschoben und/oder verfahren, um eine entsprechende Bearbeitung der freiliegenden Oberfläche des zumindest einen Grundkörpers, beispielsweise durch eine Überflutungseinheit und/oder eine Prägeeinheit und/oder eine Bedruckungseinheit und/oder eine Lasereinheit, zu ermöglichen.

Weiter ist es jedoch auch möglich, die oberen und/oder unteren Werkzeugformhälften, insbesondere die erste obere und/oder untere Werkzeugformhälfte, ortsfest zu belassen und beispielsweise zumindest eine auf einem Roboterarm angeordnete Einlegeeinheit zu verfahren, so dass mittels dieser ein Einlegen der ein oder mehreren Einlegeelemente und/oder weiteren Einlegeelemente auf zumindest einen Teilbereich und/oder die freiliegende Oberfläche des zumindest einen Grundkörpers ermöglicht wird.

Vorzugsweise erfolgt auch bei der Durchführung der weiteren oben beschriebenen Bearbeitungsschritte jeweils ein Verschieben und/oder ein Verdrehen der oberen und/oder unteren Werkzeugformhälften, insbesondere der ersten oberen und/oder unteren Werkzeugformhälften derart, dass der zumindest eine Grundkörper vorzugsweise entsprechend durch eine dem jeweiligen Bearbeitungsschritt zugeordnete Arbeitsstation bearbeitet wird.

Im Folgenden werden bevorzugte Ausführungsformen der Vorrichtung genannt.

Es ist vorteilhaft, dass die Vorrichtung mehrere weitere Arbeitsstationen umfasst, zwischen denen die oberen und/oder unteren Werkzeugformhälften, insbesondere die erste obere und/oder untere Werkzeugformhälfte, beispielsweise durch Verschieben und/oder Verdrehen, verschoben und/oder verfahren wird, um entsprechend dem vorgegebenen Verfahrensablauf den zumindest einen Grundkörper gemäß den oben beschriebenen Bearbeitungsschritten zu bearbeiten.

Es ist möglich, dass der zumindest eine obere Werkzeugträger aufweisend die zumindest zwei oberen Werkzeugmodule in die zumindest eine Richtung in zumindest eine vorbestimmte Position verfahrbar ist oder dass der zumindest eine untere Werkzeugträger aufweisend das zumindest eine untere Werkzeugmodul in die zumindest eine Richtung in zumindest eine vorbestimmte Position verfahrbar ist oder dass der zumindest eine obere Werkzeugträger und der zumindest eine untere Werkzeugträger in die zumindest eine Richtung in die zumindest eine vorbestimmte Position verfahrbar sind.

Weiter ist es möglich, dass der zumindest eine obere Werkzeugträger aufweisend die zumindest zwei oberen Werkzeugmodule und/oder dass der zumindest eine untere Werkzeugträger aufweisend das zumindest eine untere Werkzeugmodul entlang einer vorbestimmten Vorzugsrichtung und/oder in einer vorbestimmten Vorzugsebene angeordnet ist oder sind, insbesondere wobei der zumindest eine obere Werkzeugträger und/oder der zumindest eine untere Werkzeugträger als, bevorzugt vertikal oder horizontal, angeordneter Drehteller oder Schiebetisch ausgebildet ist oder sind.

Das Verfahren der zumindest einen oberen und/oder unteren Werkzeugmodule beziehungsweise Werkzeugformhälften wird hierbei vorzugsweise dadurch realisiert, dass die zumindest einen oberen und/oder unteren Werkzeugmodule und/oder Werkzeugformhälften auf dem zumindest einen oberen und/oder unteren Werkzeugträger beweglich gelagert angeordnet sind und insbesondere mit diesem fest verbunden sind. Bei diesem zumindest einen oberen und/oder unteren Werkzeugträger handelt es sich vorzugsweise um einen vertikal oder horizontal angeordneten Drehteller oder Schiebetisch. Vorzugsweise ist das zumindest eine obere und/oder untere Werkzeugmodul beziehungsweise Werkzeugformhälfte auf diesem Drehteller oder Schiebetisch befestigt. Der Drehteller und/oder Schiebetisch ist weiter entsprechend beweglich gelagert, dass die zumindest einen oberen und/oder unteren Werkzeugmodule und/oder Werkzeugformhälften zwischen den Arbeitsstationen, insbesondere zwischen der Spritzgießstation und der Überflutungsstation, verfahrbar ist.

Vorzugsweise weist die Vorrichtung hierbei nicht nur ein erstes oberes und/oder ein erstes unteres Werkzeugmodul beziehungsweise Werkzeugformhälfte, sondern zwei oder mehrere obere und/oder untere Werkzeugmodule beziehungsweise Werkzeugformhälften auf, die auf zumindest einem gemeinsamen oberen und/oder unteren Werkzeugträger des zumindest einen oberen und/oder unteren Werkzeugträgers angeordnet sind. Hierdurch ist es möglich, die Effektivität der Herstellungsverfahren, sowie den Nutzungsgrad der einzelnen Arbeitsstationen deutlich zu erhöhen. Werden beispielsweise zwei obere und/oder untere Werkzeugformhälften auf einem gemeinsamen oberen und/oder unteren Werkzeugträger des zumindest einen oberen und/oder unteren Werkzeugträgers angeordnet, so kann während der Durchführung des Überflutens in der Überflutungsstation bereits parallel ein neuer Grundkörper in der ersten Spritzgussstation spritzgegossen werden und hierdurch entsprechend eine Verdoppelung des Nutzungsgrads erzielt werden.

Es ist auch möglich, dass zumindest ein oberes Werkzeugmodul der zumindest zwei oberen Werkzeugmodule des zumindest einen oberen Werkzeugträgers und/oder dass zumindest ein unteres Werkzeugmodul des zumindest einen unteren Werkzeugmoduls des zumindest einen unteren Werkzeugträgers ausgewählt ist oder sind aus: Werkzeugformhälfte, insbesondere Werkzeugformhälfte umfassend eine Werkzeugkavität, bevorzugt eine erste Werkzeugformhälfte mit einer ersten Werkzeugkavität oder eine zweite Werkzeugformhälfte mit einer zweiten Werkzeugkavität.

Vorzugsweise sind ein oder mehrere Arbeitsstationen der ein oder mehreren Arbeitsstationen ausgewählt und/oder kombiniert aus: Spritzgießstation, Überflutungsstation, Vorbehandlungsstation, Überflutungsstation, erste weitere Spritzgießstation, zweite weitere Überflutungsstation, Reinigungsstation, Entformungsstation.

Insbesondere ist zumindest eine Arbeitsstation der ein oder mehreren Arbeitsstationen als Spritzgießstation umfassend ein erstes oberes Werkzeugmodul der zumindest zwei oberen Werkzeugmodule des zumindest einen oberen Werkzeugträgers und ein erstes unteres Werkzeugmodul des zumindest einen unteren Werkzeugmoduls des zumindest einen unteren Werkzeugträgers ausgebildet, insbesondere wobei das erste obere Werkzeugmodul eine erste obere Werkzeugformhälfte mit einer ersten oberen Werkzeugkavität ist und/oder das erste untere Werkzeugmodul eine erste und/oder zweite untere Werkzeugformhälfte mit einer ersten und/oder zweiten unteren Werkzeugkavität ist.

Vorzugsweise weist die zumindest eine Spritzgießstation zumindest eine Einlegeeinheit auf, wobei die zumindest eine Einlegeeinheit zum Einlegen ein oder mehrerer Einlegeelemente und/oder weiterer Einlegeelemente in die erste obere und/oder die erste untere Werkzeugkavität der ersten oberen beziehungsweise ersten unteren Werkzeugformhälfte ist.

Es ist auch möglich, dass die zumindest eine Spritzgießstation eine Schließvorrichtung zum Schließen eines Spritzgusswerkzeugs, insbesondere umfassend die erste obere Werkzeugformhälfte mit der ersten oberen Werkzeugkavität und die erste untere Werkzeugformhälfte mit der ersten unteren Werkzeugkavität unter Ausbildung zumindest einer ersten Spritzgusskavität, und zum Öffnen des Spritzgusswerkzeugs aufweist.

Weiter ist es auch möglich, dass die zumindest eine Spritzgießstation eine Spritzeinheit zum Einbringen zumindest eines Grundkörpers ausbildenden ersten Kunststoffmaterials in die zumindest eine erste Spritzgusskavität aufweist und/oder zum Aufbringen zumindest einer ersten Deckschicht auf zumindest einen Teilbereich der Oberfläche des zumindest einen Grundkörpers ist, insbesondere wobei die zumindest eine erste Deckschicht aus einem zweiten Kunststoffmaterial besteht.

Insbesondere umfasst der zumindest eine Grundkörper ein oder mehrere oder alle Einlegeelemente der ein oder mehreren Einlegeelemente.

Es ist möglich, dass der zumindest eine Grundkörper konturfolgend in der ersten oberen und/oder ersten unteren Werkzeugkavität der ersten oberen beziehungsweise ersten unteren Werkzeugformhälfte der ersten oberen beziehungsweise ersten unteren Werkzeugmodule des zumindest einen oberen beziehungsweise unteren Werkzeugträgers und/oder der zumindest einen ersten Spritzgusskavität angeordnet ist.

Vorzugsweise ist zumindest eine Arbeitsstation der ein oder mehreren Arbeitsstationen als Überflutungsstation umfassend ein zweites oberes Werkzeugmodul der zumindest zwei oberen Werkzeugmodule des zumindest einen oberen Werkzeugträgers und das erste untere Werkzeugmodul des zumindest einen unteren Werkzeugmoduls des zumindest einen unteren Werkzeugträgers ausgebildet, insbesondere wobei das zweite obere Werkzeugmodul eine erste obere Überflutungshälfte ist und/oder das erste untere Werkzeugmodul die erste untere Werkzeugformhälfte mit der ersten unteren Werkzeugkavität ist.

Bevorzugt ist oder umfasst die Überflutungsstation und/oder die erste obere Überflutungshälfte ein Gießwerkzeug oder ein 2K-Werkzeug.

Es ist möglich, dass die zumindest eine Überflutungsstation und/oder die erste obere Überflutungshälfte eine Überflutungseinheit zum Aufbringen zumindest einer zweiten Deckschicht aus einem zweiten Kunststoffmaterial, insbesondere auf zumindest einen Teilbereich der Oberfläche des zumindest einen Grundkörpers, bevorzugt mittels Überflutens und/oder teilweisem Überfluten, aufweist.

Die Vorrichtung weist neben der zumindest einen Spritzgießstation und der zumindest einen Überflutungsstation weiter vorzugsweise eine oder mehrere der folgenden Arbeitsstationen auf:
Zumindest eine Arbeitsstation, insbesondere zumindest eine weitere Spritzgießstation, zum Aufbringen der zumindest einen ersten und/oder zweiten Deckschicht aus einem zweiten Kunststoffmaterial, insbesondere mittels Spritzgießen, Überfluten und/oder teilweisem Überspritzen. Die zumindest eine weitere Spritzgießstation weist hierbei vorzugsweise jeweils eine Schließvorrichtung zur Ausbildung der zweiten Spritzgusskavität und/oder einer weiteren Spritzgusskavität mittels ein oder mehrerer oberer und/oder unterer zweiter und/oder dritter Werkzeugformhälften auf, insbesondere durch Abdichten der ein oder mehreren oberen und/oder unteren zweiten und/oder dritten Werkzeugformhälften gegen den zumindest einen Grundkörper, die ein oder mehreren Einlegeelemente und/oder die erste obere und/oder untere Werkzeugformhälfte. Weiter weist die zumindest eine weitere Spritzgussstation hierzu vorzugsweise eine Spritzeinheit zum Einbringen des ersten, zweiten und/oder dritten Kunststoffmaterials in die zweite Spritzgusskavität auf. Diesbezüglich wird auf obige Ausführungen verwiesen.

Weiter ist es möglich, dass die Vorrichtung zumindest eine Vorbehandlungsstation zur Vorbehandlung zumindest eines Teilbereichs der Oberfläche des zumindest einen Grundkörpers, insbesondere durch ein oder mehrere Bearbeitungsverfahren ausgewählt aus: Begasung, Beflammung, Plasmabehandlung, Fluorierung, Bestrahlung, Reinigung, Oberflächenaktivierung, Beschichtung und/oder Kombinationen hieraus aufweist.

Auch ist es möglich, dass die Vorrichtung zumindest eine Prüfstation zur optischen Prüfung zumindest eines Teilbereichs der Oberfläche des zumindest einen Grundkörpers, der ein oder mehreren Einlegeelemente und/oder des Bauteils mittels eines optischen Sensors, insbesondere mittels einer Kamera, aufweist. Die Prüfung kann hierbei, wie bereits oben ausgeführt, insbesondere mittels optischer Sensoren, insbesondere einer Kamera, erfolgen.

Weiter ist es auch möglich, dass die Vorrichtung zumindest eine Reinigungsstation aufweist, insbesondere zur Reinigung zumindest eines Teilbereichs der Oberfläche des zumindest einen Grundkörpers und/oder des Bauteils mittels Bürsten und/oder Druckluft und/oder Absaugung. Auch diesbezüglich wird auf die obigen Ausführungen zum Reinigungsschritt verwiesen.

Vorzugsweise weist die Vorrichtung eine Entformungsstation zur Entformung des zumindest einen Grundkörpers und/oder des Bauteils umfassend den zumindest einen Grundkörper auf. Weiter ist es möglich, dass die Entformungsstation zum Entformen des Bauteils umfassend den zumindest einen Grundkörper, die ein oder mehreren Einlegeelemente, sowie gegebenenfalls die ein oder mehreren weiteren Einlegeelemente und/oder die zumindest eine erste und/oder zweite Deckschicht, insbesondere aus der ersten oberen und/oder unteren Werkzeugformhälfte. **In** der Entformungsstation kann weiter auch eine entsprechende Abkühlung und Aushärtung des Bauteils vor der Entformung durchgeführt werden.

Es ist möglich, dass die Vorrichtung eine Anzahl n Arbeitsstationen, insbesondere ein oder mehrere Spritzgießstationen, ein oder mehrere Überflutungsstationen, ein oder mehrere Vorbehandlungsstationen, ein oder mehrere Prüfstationen, ein oder mehrere Reinigungsstationen und ein oder mehrere Entformungsstationen aufweist, und dass auf dem zumindest einen oberen Werkzeugträger und/oder auf dem zumindest einen unteren Werkzeugträger vorzugsweise jeweils zumindest n obere und/oder untere Werkzeugmodule, insbesondere umfassend obere und/oder untere Werkzeugformhälften und/oder obere und/oder untere Überflutungshälften, angeordnet sind. Weist die Vorrichtung so beispielsweise eine Spritzgießstation, eine Prägestation, eine weitere Spritzgießstation und eine Entformungsstation auf, werden beispielsweise zumindest vier obere oder untere Werkzeugformhälften auf dem gemeinsamen oberen oder unteren Werkzeugträger und vier untere oder obere Werkzeugformhälften auf dem unteren oder oberen Werkzeugträger vorgesehen. Die vier Bearbeitungsschritte, welche von diesen vier Arbeitsstationen, welche aus den vier oberen und den vier unteren Werkzeugformhälften kombiniert werden können, durchgeführt werden, können so jeweils parallel durchgeführt werden, wodurch der Nutzungsgrad entsprechend verbessert wird, insbesondere um den Faktor vier verbessert wird.

Weiter ist es möglich, dass die Vorrichtung ein oder mehrere Arbeitsstationen und/oder ein oder mehrere Kombinationen von ein oder mehreren Arbeitsstationen aufweist, vorzugsweise ausgewählt aus: Bedruckungsstation, insbesondere eine Bedruckungsstation für Inkjet-Druck und/oder Tampondruck, Etikettierstation, insbesondere Etikettierstation zum Aufkleben von Labels, Lasermarkierungsstation, insbesondere eine Lasermarkierungsstation zur Ablation beziehungsweise zum Materialabtrag und/oder zum Schwärzen und/oder zum Farbumschlag, bevorzugt lasersensitiver Schichten, Kaltprägestation, Heißprägestation, vorzugsweise wobei diese Arbeitsstationen, vorzugsweise zum Bedrucken, Etikettieren, Lasern, Kaltprägen, und/oder Heißprägen, vor und/oder nach der Entformung des Bauteils und/oder des zumindest einen Grundkörpers und/oder des Bauteils umfassend den zumindest einen Grundkörper, insbesondere vor und/oder nach dem Schritt d), bevorzugt vor und/oder nach der Entformungsstation, und/oder vor und/oder nach dem Überfluten, insbesondere vor und/oder nach dem Schritt e), bevorzugt vor und/oder nach der Überflutungsstation, angeordnet sind.

Bevorzugt weist die Vorrichtung zumindest eine Stellvorrichtung zum Verfahren der zumindest zwei oberen Werkzeugmodule des zumindest einen oberen Werkzeugträgers und/oder des zumindest einen unteren Werkzeugmoduls des zumindest einen unteren Werkzeugträgers, insbesondere zwischen den Arbeitsstationen der Vorrichtung, auf. Diese Stellvorrichtung kann hierbei durch einen entsprechenden Servo-Antrieb und/oder einen hydraulischen Antrieb und/oder einen pneumatischen Antrieb bereitgestellt werden. Vorzugsweise wird dieses Stellvorrichtung von einer Prozesssteuervorrichtung angesteuert, welche die zumindest eine obere und/oder untere Werkzeugformhälfte zyklisch in einer vordefinierten Abfolge zwischen den zwei oder mehreren Arbeitsstationen der Vorrichtung verfährt und den jeweiligen Arbeitsstationen zur Bearbeitung zuführt.

Weiter ist es möglich, dass die Vorrichtung eine Prozesssteuervorrichtung aufweist, welche die Stellvorrichtung derart ansteuert, dass die zumindest zwei oberen Werkzeugmodule des zumindest einen oberen Werkzeugträgers und/oder dass das zumindest eine untere Werkzeugmodul des zumindest einen unteren Werkzeugträgers zyklisch oder antizyklisch in einer vordefinierten Abfolge zwei oder mehrere Arbeitsstationen der Vorrichtung zugeführt werden, insbesondere in einer Abfolge:
Spritzgießstation - Überflutungsstation, Spritzgießstation - Überflutungsstation - Entformungsstation,
Spritzgießstation - Vorbehandlungsstation - Überflutungsstation - Entformungsstation,
Spritzgießstation - Überflutungsstation - weitere Spritzgießstation - Entformungsstation,
Spritzgießstation - Vorbehandlungsstation - Überflutungsstation - weitere
Spritzgießstation - Entformungsstation,
Spritzgießstation - Vorbehandlungsstation - Überflutungsstation - weitere
Spritzgießstation - Reinigungsstation - Entformungsstation,
Spritzgießstation - Vorbehandlungsstation - Überflutungsstation - weitere
Spritzgießstation - weitere Vorbehandlungsstation - weitere Überflutungsstation - Reinigungsstation - Entformungsstation,
Spritzgießstation - Vorbehandlungsstation - Überflutungsstation - weitere
Spritzgießstation - weitere Vorbehandlungsstation - weitere Überflutungsstation - Reinigungsstation - Prüfstation - Entformungsstation.

Im Folgenden wird die Erfindung anhand von mehreren Ausführungsbeispielen unter Zuhilfenahme der beiliegenden Zeichnungen beispielhaft erläutert.
- Fig. 1: zeigt eine schematische Darstellung eines Verfahrens.
- Fig. 2: zeigt eine schematische Darstellung einer Vorrichtung.
- Fig. 3: zeigt eine schematische Darstellung einer Vorrichtung.
- Fig. 4: zeigt eine schematische Darstellung einer Vorrichtung.
- Fig. 5: zeigt eine schematische Darstellung einer Vorrichtung.
- Fig. 6: zeigt eine schematische Darstellung einer Vorrichtung.
- Fig. 7: zeigt eine schematische Darstellung eines Werkzeugmoduls im Querschnitt.

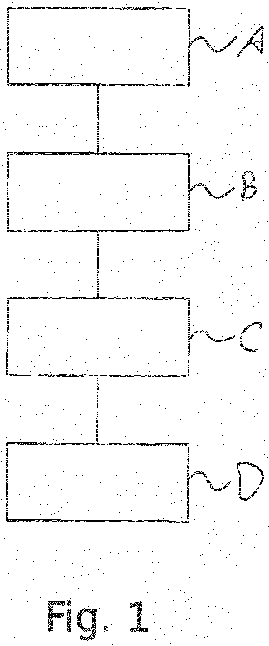

Fig. 1 zeigt ein Verfahren zur Herstellung eines Bauteils 1, wobei bei dem Verfahren folgende Schritte, insbesondere in der folgenden Abfolge, durchgeführt werden:

| | |
|---|---|
| A | Bereitstellen zumindest eines oberen Werkzeugträgers 2a und zumindest eines unteren Werkzeugträgers 2b, wobei der zumindest eine obere Werkzeugträger 2a zumindest zwei obere Werkzeugmodule 20a und der zumindest eine untere Werkzeugträger 2b zumindest ein unteres Werkzeugmodul 20b aufweist, |
| B | Verfahren des zumindest einen oberen Werkzeugträgers 2a und/oder des zumindest einen unteren Werkzeugträgers 2b in zumindest einer Richtung in zumindest eine vorbestimmte Position, |
| C | Kombination eines ersten oberen Werkzeugmoduls 20aa der zumindest zwei oberen Werkzeugmodule 20a des zumindest einen oberen Werkzeugträgers 2a und eines ersten unteren Werkzeugmoduls 20ba des zumindest einen ersten unteren Werkzeugmoduls 20b des zumindest einen unteren Werkzeugträgers 2b in der zumindest einen vorbestimmten Position derart, dass eine oder mehrere Arbeitsstationen 3 zur |
| | Durchführung zumindest eines Herstellungsschritts des Bauteils 1 ausgebildet werden, |
| D | Durchführung des zumindest einem Herstellungsschritts zur Ausbildung des Bauteils 1. |

Das erste obere Werkzeugmodul 20aa der zumindest zwei oberen Werkzeugmodule 20a des zumindest einen oberen Werkzeugträgers 2a und das zumindest eine erste untere Werkzeugmodul 20ba des zumindest einen unteren Werkzeugmoduls 20b des zumindest einen unteren Werkzeugträgers 2b werden in der zumindest einen vorbestimmten Position derart kombiniert, dass ein oder mehrere Arbeitsstationen der ein oder mehreren Arbeitsstationen 3 als Spritzgießstation 3a umfassend ein Spritzgusswerkzeug 3aa ausgebildet werden, wobei das Spritzgusswerkzeug 3aa das erste obere Werkzeugmodul 20aa und das erste untere Werkzeugmodul 20ba aufweist, wobei das erste obere Werkzeugmodul 20aa eine erste obere Werkzeugformhälfte 200aa, mit zumindest einer ersten oberen Werkzeugkavität 2000aa, aufweist und das erste untere Werkzeugmodul 20ba eine erste untere Werkzeugformhälfte 200ba mit zumindest einer ersten unteren Werkzeugkavität 2000ba aufweist.

Weiter umfasst das Verfahren die folgenden Schritte, insbesondere in der folgenden Abfolge:

| | |
|---|---|
| a | Schließen des Spritzgusswerkzeugs 3aa umfassend die erste obere Werkzeugformhälfte 200aa mit der zumindest einen ersten oberen Werkzeugkavität 2000aa, und die erste untere Werkzeugformhälfte 200ba mit der zumindest einen ersten unteren Werkzeugkavität 2000ba, wobei zumindest eine von der ersten oberen Werkzeugkavität 2000aa und der ersten unteren Werkzeugkavität 2000ba bestimmte erste Spritzgusskavität 2000 ausgebildet wird, |
| b | Spritzgießen zumindest eines Grundkörpers 4 durch Einbringung eines ersten Kunststoffmaterials 4a in die zumindest eine erste Spritzgusskavität 2000, |
| c | Öffnen des Spritzgusswerkzeugs 3aa, wobei der zumindest eine Grundkörper 4 konturfolgend in der zumindest einen ersten unteren oder ersten oberen Werkzeugkavität 2000aa, 2000ba verbleibt und lediglich zumindest ein erster Teilbereich ein oder mehrerer Oberflächen des zumindest einen Grundkörpers 4 freigelegt wird, wobei zumindest ein zweiter Teilbereich der Oberfläche des Grundkörpers 4 jedoch noch in der ersten oberen oder unteren Werkzeugkavität 2000aa, 2000ba verbleibt, |
| d | Entformung des Bauteils 1, umfassend den zumindest einen Grundkörper 4 aus der ersten oberen oder unteren Werkzeugkavität 2000aa, 2000ba beziehungsweise Werkzeugformhälfte 200aa, 200ba. |

Es ist auch weiter möglich, dass vor dem Schritt a und/oder d einfach oder mehrfach folgender weiterer Schritt durchgeführt wird:

| | |
|---|---|
| a1 | Einlegen ein oder mehrerer Einlegeelemente 5 in die zumindest eine erste Spritzgusskavität 2000 und/oder auf zumindest einen freiliegenden ersten Teilbereich des zumindest einen freiliegenden ersten Teilbereichs der Oberfläche des zumindest einen Grundkörpers 4, wobei der zumindest eine Grundkörper 4 konturfolgend in der zumindest einen ersten oberen oder ersten unteren Werkzeugkavität 2000aa, 2000ba der ersten oberen oder ersten unteren Werkzeugformhälfte 200aa, 200ba verbleibt. |

Vorzugsweise umfasst der Grundkörper 4 in dem Schritt d ein oder mehrere oder alle Einlegeelemente der ein oder mehreren Einlegeelemente 5, insbesondere wobei ein oder mehrere Einlegelemente der ein oder mehreren Einlegeelemente 5 als Folienelemente, bevorzugt einer Folie, als Dekorelemente und/oder als funktionale Elemente, ausgebildet sind.

Nach dem Schritt d, insbesondere zwischen den Schritten a und b und/oder b und c, wird einfach oder mehrfach folgender weiterer Schritt durchgeführt wird:

| | |
|---|---|
| e | Aufbringen zumindest einer ersten Deckschicht 6 aus einem zweiten Kunststoffmaterial 6a mittels Überfluten auf zumindest einen Teilbereich der Oberfläche des zumindest einen Grundkörpers 4. |

Insbesondere verbleibt bei der Durchführung des Schritts e der zumindest eine Grundkörper 4 konturfolgend in der ersten oberen oder ersten unteren Werkzeugkavität 2000aa, 2000ba der ersten oberen oder ersten unteren Werkzeugformhälfte 200aa, 200ba.

Bei der Durchführung des Schritts e wird zumindest eine zweite Spritzgusskavität mittels ein oder mehrerer weiterer oberer Werkzeugformhälften der zumindest zwei oberen Werkzeugmodule 20a des zumindest einen oberen Werkzeugträgers 2a oder ein oder mehrerer weiterer unterer Werkzeugformhälften des zumindest einen unteren Werkzeugmoduls 20b des zumindest einen unteren Werkzeugträgers 2b, durch Abdichten der ein oder mehreren weiteren oberen oder unteren weiteren Werkzeugformhälften gegen den Grundkörper 4, die optionalen ein oder mehreren Einlegeelemente 5 oder die erste obere oder untere weitere Werkzeugformhälfte ausgebildet, und das zweite Kunststoffmaterial 6a in die zumindest eine zweite Spritzgusskavität 2001 eingebracht.

Weiter ist es möglich, dass zwischen den Schritten b, c und/oder d und/oder zwischen den Schritten d und e oder d einfach oder mehrfach folgender Schritt durchgeführt wird:
- Vorbehandeln zumindest eines freiliegenden ersten Teilbereichs des zumindest einen freiliegenden ersten Teilbereichs der Oberfläche des zumindest einen Grundkörpers 4, insbesondere durch ein oder mehrere Bearbeitungsverfahren und/oder Kombinationen aus ein oder mehreren Bearbeitungsverfahren ausgewählt aus: Begasung, Beflammung, Plasmabehandlung, Fluorierung, Bestrahlung, Reinigung, Oberflächenaktivierung, Beschichtung.

Es ist auch möglich, dass zwischen den Schritten c, d und/oder e zumindest eine optische Prüfung zumindest eines Teilbereichs der Oberfläche des zumindest einen Grundkörpers 4, der ein oder mehreren Einlegeelemente 5, und/oder des Bauteils 1 mittels eines optischen Sensors oder mehrerer optischer Sensoren, insbesondere ein oder mehrerer Kameras, erfolgt.

Weiter ist es auch möglich, dass nach dem Schritt c oder d und/oder zwischen den Schritten d und e und/oder nach dem Schritt e folgender Schritt durchgeführt wird:
- Reinigung, insbesondere mittels Bürsten und/oder Druckluft und/oder Absaugung.

Insbesondere werden ein oder mehrere Einlegeelemente der ein oder mehreren Einlegeelemente 5 in Schritt a1 als eine Transferfolie, insbesondere eine Kaltprägefolie, umfassend eine Trägerlage und eine von dieser ablösbare Transferlage, verwendet, auf die Transferlage und/oder auf zumindest einen Teilbereich der Oberfläche des zumindest einen Grundkörpers 4 eine Kleberschicht, insbesondere mittels eines Inkjet-Druckkopfes, in zumindest einen ersten Bereich aufgebracht wird, in zumindest einem zweiten Bereich jedoch nicht aufgebracht wird, mittels des Prägewerkzeugs die Transferfolie gegen die ein oder mehreren Oberflächen des zumindest einen Grundkörpers 4 geführt wird, die Kleberschicht aktiviert und die Transferfolie wieder abgezogen wird, so dass ein durch die Formgebung des ersten Bereichs bestimmter Ausschnitt der Transferlage als die ein oder mehreren Einlegeelemente 5 appliziert werden.

Vorzugsweise werden vor dem Schritt a ein oder mehrere weitere Einlegeelemente 5 in die zumindest eine erste Spritzgusskavität 2000 einbracht, insbesondere in die erste obere und/oder erste untere Werkzeugformhälfte 200aa, 200ba eingelegt werden, und in Schritt b mit dem ersten Kunststoffmaterial 4a hinterspritzt und/oder umspritzt werden.

Es ist möglich, dass bei der Durchführung des Schritts a1 ein oder mehrere Einlegeelemente der ein oder mehreren Einlegeelemente 5 registergenau zu ein oder mehreren weiteren Einlegeelemente der ein oder mehreren weiteren Einlegeelemente eingelegt werden, insbesondere wobei ein oder mehrere Registermarken oder optische Merkmale der ein oder mehreren weiteren Einlegeelemente und/oder der ersten oberen und/oder ersten unteren Werkzeugkavitäten 2000aa, 2000ba beziehungsweise Werkzeugformhälften 200aa, 200ba erfasst werden und zur Steuerung des Einlegens verwendet werden.

Weiter ist es möglich, dass die ein oder mehreren Einlegeelemente 5 und/oder die ein oder mehreren weiteren Einlegeelemente jeweils zumindest eine Dekorschicht, zumindest eine funktionelle Schicht, insbesondere eine Schicht mit einer elektrischen Funktionalität, insbesondere umfassend ein oder mehrere Elemente ausgewählt aus Touchsensor, Antenne, Kondensator, Spule, elektromagnetische Abschirmung, elektrisch nicht leitfähige, metallische Schichten, insbesondere zur Vermeidung elektrostatischer Aufladung, Display, LED, elektrische Schaltung, Solarzelle, zumindest eine insbesondere nachhärtbare Schutzschicht und/oder zumindest eine Haftvermittlungsschicht beziehungsweise Haftvermittlerschicht aufweisen.

Vorzugsweise wird die erste obere und/oder erste untere Werkzeugformhälfte 200aa, 200ba zwischen der Durchführung der Schritte a1 und b, der Schritte a und b und/oder der Schritte d und e gedreht und/oder verschoben und/oder verfahren.

Erfindungsgemäß werden ein zweites oberes Werkzeugmodul 20ab der zumindest zwei oberen Werkzeugmodule 20a des zumindest einen oberen Werkzeugträgers 2a und das erste untere Werkzeugmodul 20ba des zumindest einen unteren Werkzeugmoduls 20b des zumindest einen zweiten Werkzeugträgers 2b in der zumindest einen vorbestimmten Position derart kombiniert, dass ein oder mehrere Arbeitsstationen der ein oder mehreren Arbeitsstationen 3 als Überflutungsstation 3b umfassend das zweite obere Werkzeugmodul 2ab und das erste untere Werkzeugmodul 2ba ausgebildet ist, insbesondere wobei das zweite obere Werkzeugmodul 20ab eine zweite obere Werkzeugformhälfte 200ab mit einer ersten oberen Überflutungshälfte 2000ab ist und/oder das erste untere Werkzeugmodul 20ba die erste und/oder zweite Werkzeugformhälfte 200ba mit der ersten und/oder zweiten Werkzeugkavität 2000ba ist.

Es ist auch möglich, dass zwischen den Schritten d und e und/oder nach dem Schritt e folgender Schritt durchgeführt wird:

| | |
|---|---|
| f | Aufbringen zumindest einer zweiten Deckschicht 6 auf zumindest einen Teilbereich der Oberfläche des zumindest einen Grundkörpers 4. |

Weiter ist es auch möglich, dass in dem Schritt f die zumindest eine zweite Deckschicht 7 mittels der Überflutungsstation 3b derart aufgebracht wird, dass ein oder mehrere Einlegeelemente der ein oder mehreren Einlegeelemente 5 zwischen dem zumindest einen Grundkörper 4 und der zumindest einen zweiten Deckschicht 7 zumindest teilweise eingekapselt sind.

Insbesondere wird in Schritt f die zumindest eine zweite Deckschicht 7 mittels der Überflutungsstation 3b derart aufgebracht, dass die zumindest eine zweite Deckschicht 7 die ein oder mehreren Einlegeelemente 5 und/oder den zumindest einen ersten Teilbereich der Oberfläche des Grundkörpers 4 lediglich teilflächig oder vollständig überlappt.

Auch ist es weiter möglich, dass vor und/oder während und/oder nach dem Aufbringen der zumindest einen zweiten Deckschicht 7 in Schritt c, insbesondere mittels der Überflutungsstation 3b, die zumindest eine zweite Deckschicht 7 modifiziert und/oder strukturiert wird, vorzugsweise durch Einlegen/Auflegen von Partikeln auf zumindest einen Teilbereich der Oberfläche des zumindest einen Grundkörpers 4 und/oder nach Schritt b und/oder durch Verwendung von Werkzeugstrukturen während des Aufbringens in Schritt f und/oder durch nachträgliches Lasern, Überdrucken und/oder Überprägen der zumindest einen zweiten Deckschicht 7.

Vorzugsweise besteht die zumindest eine zweite Deckschicht 7 aus einem dritten Kunststoffmaterial 7a.

Es ist möglich, dass das erste und/oder zweite und/oder dritte Kunststoffmaterial 4a, 6a, 7a aus einem thermoplastischen Kunststoffmaterial, aus einem durch Vernetzung aushärtenden Kunststoffmaterial, insbesondere einem 2K-Material und/oder Zweikomponentenmaterial und/oder aus einem thermisch und/oder aus einem durch Strahlung härtbaren Material, und/oder aus einer Mischung derartiger Kunststoffmaterialien besteht und/oder wobei dass das erste und/oder zweite und/oder dritte Kunststoffmaterial 4a, 6a, 7a, insbesondere durch Bestrahlung, vollständig oder teilweise ausgehärtet wird.

Weiter ist es möglich, dass das erste und/oder zweite und/oder dritte Kunststoffmaterial 4a, 6a, 7a aus Polyurethan oder Polyurea besteht und das erste und/oder zweite und/oder dritte Kunststoffmaterial 4a, 6a, 7a aus einem Thermoplast, insbesondere aus ABS, ASA, ABS-PC, PC-PBT und/oder ASA-PC besteht und/oder dass die Zusammensetzung des ersten und/oder zweiten und/oder dritten Kunststoffmaterials 4a, 6a, 7a aus der Gruppe, die aus Polyurethan-haltigen Dispersionen, Polyurethan-haltigen Harzen, Polyurethan-Lösungen, Zusammensetzungen aus Polyurethan-Vorläufern 2K-PUR Systemen und Mischungen davon besteht, ausgewählt wird.

Bevorzugt wird der Schritt e mehrfach mit unterschiedlichen ersten und/oder zweiten und/oder dritten Kunststoffmaterialien 4a, 6a, 7a und/oder unterschiedlichen weiteren oberen und/oder unteren Werkzeugformhälften durchgeführt.

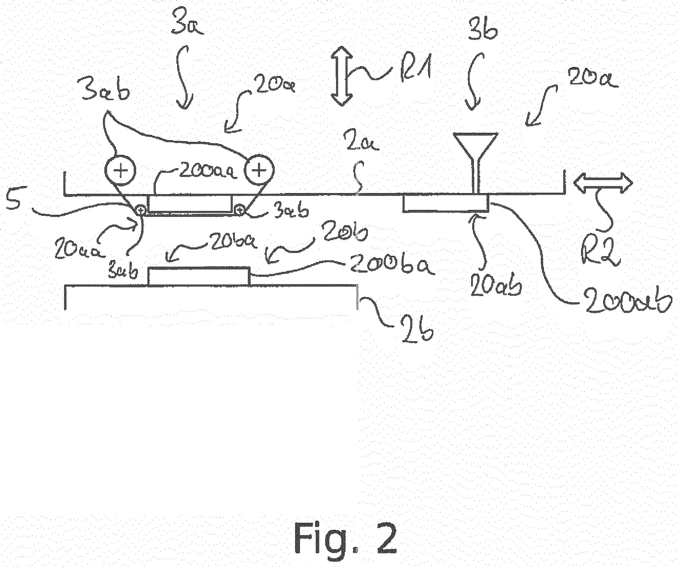

Die Figur 2 zeigt eine Vorrichtung 10 zur Herstellung eines Bauteils 1, insbesondere zur Durchführung eines vorstehend beschriebenen Verfahrens oder ein oder mehrerer der Verfahrensschritte A, B, C, D, a1, a, b, c, d, e und/oder f, wobei die Vorrichtung einen oberen Werkzeugträger 2a und einen unteren Werkzeugträger 2b aufweist, wobei der obere Werkzeugträger 2a zwei obere Werkzeugmodule 20a und der untere Werkzeugträger 2b ein unteres Werkzeugmodul 20b aufweist, wobei der obere Werkzeugträger 2a in eine erste Richtung beziehungsweise Gegenrichtung R1 und/oder in eine zweite Richtung beziehungsweise Gegenrichtung R2 in zumindest eine vorbestimmte Position verfahrbar ist, insbesondere wobei der untere Werkzeugträger 2b nicht verfahrbar ist, und wobei ein erstes oberes Werkzeugmodul 20aa der zwei oberen Werkzeugmodule 20a des oberen Werkzeugträgers 2a und ein erstes unteres Werkzeugmodul 20ba des einen unteren Werkzeugmoduls 20b des unteren Werkzeugträgers 2b derart in der zumindest einen vorbestimmten Position kombinierbar sind, dass zwei Arbeitsstationen 3a, 3b, insbesondere zur Durchführung zumindest eines Herstellungsschritts des Bauteils 1, ausgebildet werden.

Insbesondere sind die erste Richtung beziehungsweise Gegenrichtung R1 und die zweite Richtung beziehungsweise Gegenrichtung R2 hierbei senkrecht zueinander angeordnet.

Auch zeigt die Figur 2 weiter, dass die Spritzgießstation 3a eine Einlegeeinheit 3ab aufweist, wobei die Einlegeeinheit 3ab zum Einlegen und/oder Vorschieben ein oder mehrerer Einlegeelemente 5 in die erste obere Werkzeugformhälfte 200aa ist.

Weiter ist der obere Werkzeugträger 2a aufweisend die zwei oberen Werkzeugmodule 20a jeweils in die Richtungen R1 und/oder R2 in zumindest eine vorbestimmte Position verfahrbar.

Es ist möglich, dass der zumindest eine obere Werkzeugträger 2a aufweisend die zumindest zwei oberen Werkzeugmodule 20a und/oder dass der zumindest eine untere Werkzeugträger 2b aufweisend das untere Werkzeugmodul 20b entlang einer vorbestimmten Vorzugsrichtung und/oder in einer vorbestimmten Vorzugsebene angeordnet ist, insbesondere wobei der obere Werkzeugträger 2a als, bevorzugt vertikal oder horizontal, angeordneter Drehteller oder Schiebetisch ausgebildet ist.

Weiter ist es möglich, dass zumindest ein oberes Werkzeugmodul der zwei oberen Werkzeugmodule 20a des oberen Werkzeugträgers 2a und/oder dass das untere Werkzeugmodul des unteren Werkzeugmoduls 20b des unteren Werkzeugträgers 2b ausgewählt ist oder sind aus: Werkzeugformhälfte, insbesondere Werkzeugformhälfte umfassend eine Werkzeugkavität, bevorzugt eine erste Werkzeugformhälfte mit einer ersten Werkzeugkavität oder eine zweite Werkzeugformhälfte mit einer zweiten Werkzeugkavität.

Auch ist es möglich, dass eine oder beide Arbeitsstationen der zwei Arbeitsstationen 3a, 3b ausgewählt sind und/oder kombiniert sind aus: Spritzgießstation, Überflutungsstation, Vorbehandlungsstation, erste weitere Überflutungsstation, weitere Spritzgießstation, zweite weitere Überflutungsstation, Reinigungsstation, Entformungsstation.

Die Figur 2 zeigt weiter, dass eine erste Arbeitsstation der zwei Arbeitsstationen 3 als Spritzgießstation 3a umfassend ein erstes oberes Werkzeugmodul 20aa der zwei oberen Werkzeugmodule 20a des oberen Werkzeugträgers 2a und ein erstes unteres Werkzeugmodul 20ba des unteren Werkzeugmoduls 20b des unteren Werkzeugträgers 2b ausgebildet ist.

Auch zeigt die Figur 2 weiter, dass eine zweite Arbeitsstation der zwei Arbeitsstationen 3 als Überflutungsstation 3b umfassend ein zweites oberes Werkzeugmodul 20ab der zwei oberen Werkzeugmodule 20a des oberen Werkzeugträgers 2a und das erste untere Werkzeugmodul 2ba des unteren Werkzeugmoduls 20b des unteren Werkzeugträgers 2b ausgebildet ist, insbesondere wobei das zweite obere Werkzeugmodul 20ab eine zweite obere Werkzeugformhälfte 200ab und/oder das erste untere Werkzeugmodul 20ba die erste untere Werkzeugformhälfte 200ba ist.

Es ist hierbei möglich, dass die Überflutungsstation 3b und/oder die zweite obere Werkzeugformhälfte 200ab ein Gießwerkzeug oder ein 2K-Werkzeug ist oder umfasst.

Weiter ist es möglich, dass die Überflutungsstation 3b und/oder die zweite obere Werkzeugformhälfte 200ab eine Überflutungseinheit 3ba zum Aufbringen zumindest einer zweiten Deckschicht 7 aus einem zweiten Kunststoffmaterial 7a, insbesondere auf zumindest einen Teilbereich der Oberfläche zumindest eines Grundkörpers 4, bevorzugt mittels Überflutens und/oder teilweisem Überfluten, aufweist.

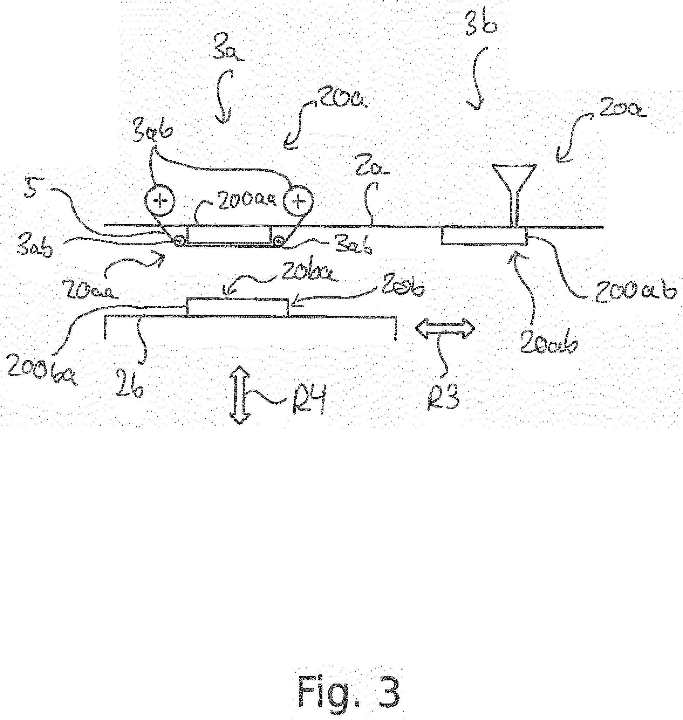

Die Figur 3 zeigt die in der Figur 2 gezeigte Vorrichtung 10, bis auf, dass der obere Werkzeugträger 2a nicht verfahrbar ist und der untere Werkzeugträger 2b in eine dritte Richtung beziehungsweise Gegenrichtung R3 und/oder in eine vierte Richtung beziehungsweise Gegenrichtung R4 in zumindest eine vorbestimmte Position verfahrbar ist.

Insbesondere sind die dritte Richtung beziehungsweise Gegenrichtung R3 und die vierte Richtung beziehungsweise Gegenrichtung R4 hierbei senkrecht zueinander angeordnet. Die dritte Richtung beziehungsweise Gegenrichtung R3 kann in dem hier gezeigten Beispiel auch eine Drehbewegung um eine zur Richtung R4 parallele Drehachse sein.

Es ist auch möglich, dass der erste Werkzeugträger und der zweite Werkzeugträger jeweils in ein oder mehrere der Richtungen R1, R2, R3 und/oder R4 verfahrbar und/oder entlang der Achsen, welche durch diese Richtungen aufgespannt werden, drehbar ist.

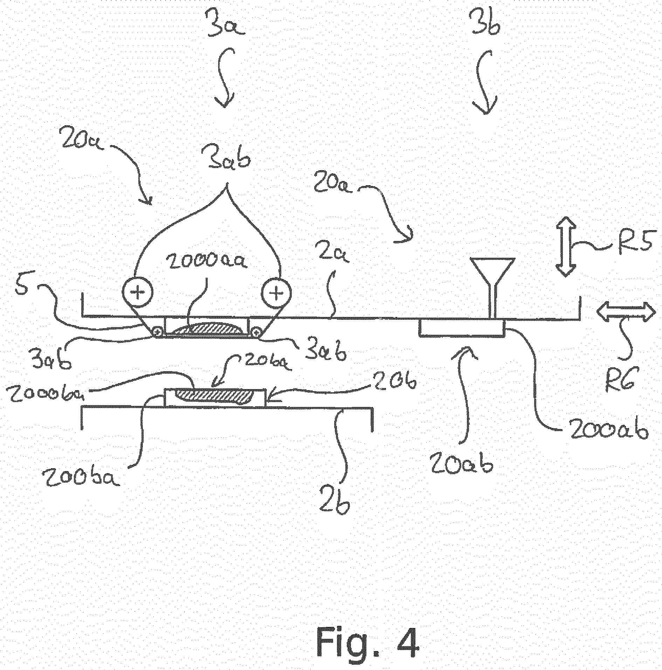

Die Figur 4 zeigt die in der Figur 2 gezeigte Vorrichtung 10, bis auf, dass der obere Werkzeugträger 2a in eine fünfte Richtung beziehungsweise Gegenrichtung R5 und/oder in eine sechste Richtung beziehungsweise Gegenrichtung R6 verfahrbar ist und der untere Werkzeugträger 2b nicht in zumindest eine vorbestimmte Position verfahrbar ist.

Insbesondere sind die fünfte Richtung beziehungsweise Gegenrichtung R5 und die sechste Richtung beziehungsweise Gegenrichtung R6 hierbei senkrecht zueinander angeordnet.

Weiter zeigt die Figur 4, dass das erste obere Werkzeugmodul 20aa eine erste obere Werkzeugformhälfte 200aa mit einer ersten oberen Werkzeugkavität 2000aa ist und das erste untere Werkzeugmodul 20ba eine zweite untere Werkzeugformhälfte 200ba mit einer zweiten unteren Werkzeugkavität 2000ba ist.

Auch zeigt die Figur 4 weiter, dass die Spritzgießstation 3a eine Einlegeeinheit 3ab aufweist, wobei die Einlegeeinheit 3ab zum Einlegen und/oder Vorschieben ein oder mehrerer Einlegeelemente 5 in die erste obere Werkzeugkavität 2000aa der ersten oberen Werkzeugformhälfte 200aa ist.

Es ist möglich, dass die zumindest eine Spritzgießstation 3a eine Schließvorrichtung 3ac zum Schließen eines Spritzgusswerkzeugs 3aa, insbesondere umfassend die erste obere Werkzeugformhälfte 200aa mit der ersten oberen Werkzeugkavität 2000aa und die erste untere Werkzeugformhälfte 200ba mit der ersten unteren Werkzeugkavität 2000ba unter Ausbildung zumindest einer ersten Spritzgusskavität 2000, und zum Öffnen des Spritzgusswerkzeugs 3aa aufweist.

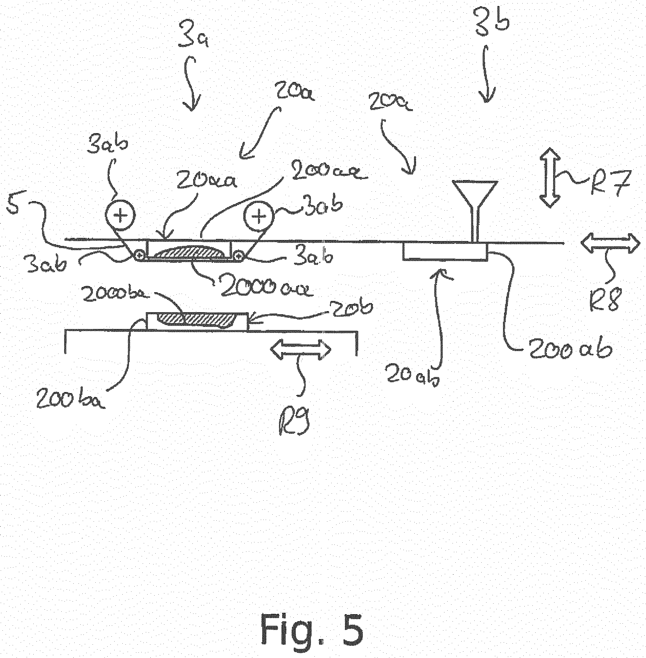

Die Figur 5 zeigt die in der Figur 4 gezeigte Vorrichtung 10, bis auf, dass der obere Werkzeugträger 2a in eine siebte Richtung beziehungsweise Gegenrichtung R7 und/oder in eine achte Richtung beziehungsweise Gegenrichtung R8 verfahrbar ist und der untere Werkzeugträger 2b in eine neunte Richtung beziehungsweise Gegenrichtung R9 in zumindest eine vorbestimmte Position verfahrbar ist. Die neunte Richtung beziehungsweise Gegenrichtung R9 kann in dem hier gezeigten Beispiel auch eine Drehbewegung um eine zur Richtung R7 parallele Drehachse sein.

Insbesondere sind die siebte Richtung beziehungsweise Gegenrichtung R7 und die achte Richtung beziehungsweise Gegenrichtung R8 hierbei senkrecht zueinander angeordnet und die siebten und achten Richtungen beziehungsweise Gegenrichtungen R7 und R8 sind senkrecht beziehungsweise parallel zu der neunten Richtung beziehungsweise Gegenrichtung R9 angeordnet.

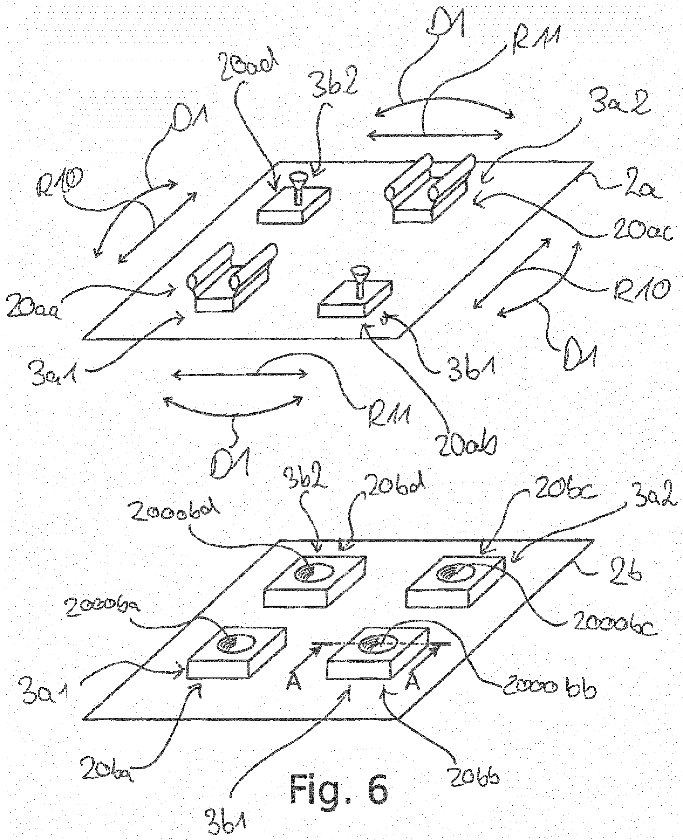

Die Figur 6 zeigt eine Vorrichtung 10 umfassend eine obere Werkzeughälfte 2a und eine untere Werkzeughälfte 2b, welche insbesondere eine rechteckige, bevorzugt quadratische, weiter bevorzugt kreisförmige, Grundfläche aufweisen. Weiter weist der obere Werkzeugträger 2a vier obere Werkzeugmodule 20aa, 20ab, 20ac, 20ad auf. Der untere Werkzeugträger 2b weist vier untere Werkzeugmodule 20ba, 20bb, 20bc, 20bd auf.

Hierbei ist der obere Werkzeugträger 2a entlang einer zehnten Richtung beziehungsweise Gegenrichtung R10 und/oder einer elften Richtung beziehungsweise Gegenrichtung R11 verfahrbar und/oder verschiebbar sowie entlang einer ersten Drehrichtung beziehungsweise Gegendrehrichtung D1 verfahrbar beziehungsweise drehbar.

Insbesondere sind die zehnte Richtung beziehungsweise Gegenrichtung R8 und die elfte Richtung beziehungsweise Gegenrichtung R11 hierbei senkrecht zueinander angeordnet. Vorzugsweise steht die Drehachse, welche die erste Drehrichtung beziehungsweise Gegendrehrichtung D1 definiert, senkrecht auf der durch den oberen und/oder unteren Werkzeugträger 2a, 2b aufgespannten Ebene.

Die in der Figur 6 gezeigte Vorrichtung 10 weist in der gezeigten, insbesondere räumlichen, Anordnung des oberen Werkzeugträgers 2a umfassend die vier oberen Werkzeugmodule 20aa, 20ab, 20ac, 20ad und den unteren Werkzeugträger 2b umfassend die vier unteren Werkzeugmodule 20ba, 20bb, 20bc, 20bd vier Arbeitsstationen auf. Hierbei ist die erste Arbeitsstation als eine erste Spritzgießstation 3a1 eine Kombination aus dem ersten oberen Werkzeugmodul 20aa und dem ersten unteren Werkzeugmodul 20ba, die zweite Arbeitsstation als eine erste Überflutungsstation 3b1 eine Kombination aus dem zweiten oberen Werkzeugmodul 20ab und dem zweiten unteren Werkzeugmodul 20bb, die dritte Arbeitsstation als eine zweite Spritzgießstation 3a2 eine Kombination aus dem dritten oberen Werkzeugmodul 20ac und dem dritten unteren Werkzeugmodul 20bc und die vierte Arbeitsstation als eine zweite Überflutungsstation 3b2 eine Kombination aus dem vierten oberen Werkzeugmodul 20ad und dem vierten unteren Werkzeugmodul 20bd. Die vier unteren Werkzeugmodule 20ba, 20bb, 20bc, 20bd weisen jeweils eine Werkzeugkavität 2000ba, 2000bb, 2000bc, 2000bd auf.

Bei Drehung des oberen Werkzeugträgers um 90° um die Drehachse, insbesondere entlang der ersten Drehrichtung beziehungsweise Gegendrehrichtung D1, ergibt sich eine weitere Kombination von vier Arbeitsstationen. Nach vier Drehungen des oberen Werkzeugträgers um 90° um die Drehachse, insbesondere entlang der ersten Drehrichtung beziehungsweise Gegendrehrichtung D1, also um 360°, ergibt sich die vorstehend beschriebene, initiale Kombination der vier Arbeitsstationen umfassend die erste Spritzgießstation 3a1, die erste Überflutungsstation 3b1, die zweite Spritzgießstation 3a2 und die zweite Überflutungsstation 3b2.

Alternativ oder zusätzlich ist es auch möglich, dass der untere Werkzeugträger um dieselbe Drehachse und/oder weitere Drehachsen wie der obere Werkzeugträger drehbar und/oder verschiebbar ist.

Eine derartige Vorrichtung 10 ermöglicht es vorteilhafterweise, dass vier Bearbeitungsschritte, insbesondere entlang eines Zyklus umfassend vier 90°-Drehungen entlang der Drehachse, insbesondere entlang der ersten Drehrichtung beziehungsweise Gegendrehrichtung D1, welche von diesen vier Arbeitsstationen kombinierbar aus den vier oberen Werkzeugmodule 20aa, 20ab, 20ac, 20ad und den vier unteren Werkzeugmodule 20ba, 20bb, 20bc, 20bd durchgeführt werden, jeweils parallel durchgeführt werden, wodurch der Nutzungsgrad entsprechend verbessert wird, insbesondere um den Faktor vier verbessert wird.

Alternativ ist es möglich, dass zwei der oberen Werkzeugmodule 20aa, 20ab oder 20ac und 20ad nicht vorhanden sind, sodass stets zwei der unteren Werkzeugmodule 20ba und 20bb oder 20bc und 20bd frei sind. Diese freien unteren Werkzeugmodule und gegebenenfalls darin befindliche Grundkörper können weitere Bearbeitungsschritte durchlaufen, während in den anderen beiden Arbeitsstationen Spritzgussprozesse und Überflutungsprozesse ablaufen. Beispielsweise können an den freien Werkzeugmodulen an den gegebenenfalls darin befindlichen Grundkörpern Prüfvorgänge und/oder Reinigungsvorgänge und/oder Vorbehandlungsvorgänge und/oder Bedruckungsvorgänge und/oder Lasermarkierungsvorgänge ablaufen, die bevorzugt zeitlich mit den Taktungen oder Spritzgussprozesse und Überflutungsprozesse übereinstimmen oder zeitlich kürzer ablaufen.

Weiter ist es möglich, dass die Spritzgießstationen 3a1, 3a2 jeweils eine Spritzeinheit 3ad zum Einbringen zumindest eines Grundkörpers 4 ausbildenden ersten Kunststoffmaterials 4a in zumindest eine erste Spritzgusskavität 2000 aufweisen und/oder zum Aufbringen zumindest einer ersten Deckschicht 6 auf zumindest einen Teilbereich der Oberfläche des zumindest einen Grundkörpers 4 ist, insbesondere wobei die zumindest eine erste Deckschicht 6 aus einem zweiten Kunststoffmaterial 6a besteht, wobei der zumindest eine Grundkörper 4 ein oder mehrere oder alle Einlegeelemente der ein oder mehreren Einlegeelemente 5 umfasst.

Weiter ist es möglich, dass der zumindest eine Grundkörper 4 konturfolgend in den unteren Werkzeugkavität 2000ba, 2000bb, 2000bc, 2000bd, insbesondere der unteren Werkzeugformhälften 200ba, 200bb, 200bc, 200bd, der unteren Werkzeugmodule 20ba, 20bb, 20bc, 20bd des unteren Werkzeugträgers 2b und/oder der zumindest einen ersten Spritzgusskavität 2000 angeordnet ist.

Auch ist es möglich, dass die in der Figur 6 gezeigten Überflutungsstationen 3b1, 3b2 ein Gießwerkzeug oder ein 2K-Werkzeug umfassen.

Weiter ist es möglich, dass die Überflutungsstationen 3b1, 3b2 und/oder die oberen Werkzeugformhälften 20a, 20ad jeweils eine Überflutungseinheit 3ba zum Aufbringen zumindest einer zweiten Deckschicht 7 aus einem zweiten Kunststoffmaterial 7a, insbesondere auf zumindest einen Teilbereich der Oberfläche des zumindest einen Grundkörpers 4, bevorzugt mittels Überflutens und/oder teilweisem Überfluten, aufweist.

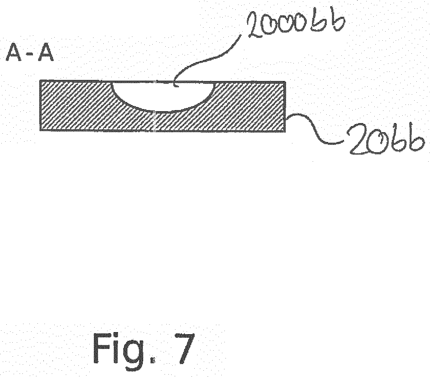

Die Figur 7 zeigt beispielsweise das in der Figur 6 gezeigte Werkzeugmodule 20bb in einem Querschnitt entlang der in der Figur 6 gezeigten Linie A-A und insbesondere senkrecht zu der durch die Grundfläche des unteren Werkzeugträgers 2b aufgespannten Ebene, wobei das Werkzeugmodul 20bb eine Werkzeugkavität 2000bb aufweist.

Es hat sich als vorteilhaft erwiesen, falls die Vorrichtung 10 ein oder mehrere der folgenden Arbeitsstationen aufweist:
- Vorbehandlungsstation 3c zur Vorbehandlung zumindest eines Teilbereichs der Oberfläche des zumindest einen Grundkörpers 4, insbesondere durch ein oder mehrere Bearbeitungsverfahren ausgewählt aus: Begasung, Beflammung, Plasmabehandlung, Fluorierung, Bestrahlung, Reinigung, Oberflächenaktivierung, Beschichtung und/oder Kombinationen hieraus
- Prüfstation 3d zur optischen Prüfung zumindest eines Teilbereichs der Oberfläche des zumindest einen Grundkörpers 4, der ein oder mehreren Einlegeelemente 5 und/oder des Bauteils 1 mittels eines optischen Sensors, insbesondere mittels einer Kamera
- Reinigungsstation 3e aufweist, insbesondere zur Reinigung zumindest eines Teilbereichs der Oberfläche des zumindest einen Grundkörpers 4 und/oder des Bauteils 1 mittels Bürsten und/oder Druckluft und/oder Absaugung
- Entformungsstation 3f zur Entformung des zumindest einen Grundkörpers 4 und/oder des Bauteils 1, insbesondere umfassend den zumindest einen Grundkörper 4
- Stellvorrichtung 10a zum Verfahren der zumindest zwei oberen Werkzeugmodule 20a des zumindest einen oberen Werkzeugträgers 2a und/oder des zumindest einen unteren Werkzeugmoduls 20b des zumindest einen unteren Werkzeugträgers 2b, insbesondere zwischen den Arbeitsstationen 3 der Vorrichtung
- Bedruckungsstation, insbesondere Bedruckungsstation für Inkjet-Druck und/oder Tampondruck
- Etikettierstation, insbesondere Etikettierstation zum Aufkleben von Labels
- Lasermarkierungsstation, insbesondere Lasermarkierungsstation zur Ablation und/oder zum Schwärzen und/oder zum Farbumschlag, bevorzugt von lasersensitiven Schichten und/oder Bereichen des Grundkörpers und/oder des Bauteils
- Kaltprägestation
- Heißprägestation

Weiter ist es möglich, dass die Vorrichtung 10 ein oder mehrere Arbeitsstationen und/oder ein oder mehrere Kombinationen von ein oder mehreren Arbeitsstationen aufweist, vorzugsweise ausgewählt aus: Bedruckungsstation, insbesondere eine Bedruckungsstation für Inkjet-Druck und/oder Tampondruck, Etikettierstation, insbesondere Etikettierstation zum Aufkleben von Labels, Lasermarkierungsstation, insbesondere eine Lasermarkierungsstation zur Ablation und/oder zum Schwärzen und/oder zum Farbumschlag, bevorzugt von lasersensitiven Schichten und/oder Bereichen des Grundkörpers, Kaltprägestation, Heißprägestation, vorzugsweise wobei diese Arbeitsstationen, vorzugsweise zum Bedrucken, Etikettieren, Lasern, Kaltprägen, und/oder Heißprägen, vor und/oder nach der Entformung des Bauteils und/oder des zumindest einen Grundkörpers und/oder des Bauteils umfassend den zumindest einen Grundkörper auf, insbesondere vor und/oder nach dem Schritt d), bevorzugt vor und/oder nach der Entformungsstation, und/oder vor und/oder nach dem Überfluten, insbesondere vor und/oder nach dem Schritt e), bevorzugt vor und/oder nach der Überflutungsstation, angeordnet sind.

Weiter ist es möglich, dass ein oder mehrere Einlegeelemente der ein oder mehreren Einlegeelemente in Schritt a1) als eine Transferfolie, insbesondere eine Heißprägefolie, bevorzugt umfassend eine Trägerlage und/oder eine von dieser ablösbare Transferlage mit einer Kleberschicht, verwendet werden, insbesondere wobei die Transferfolie mittels eines erhitzten Prägewerkzeugs gegen die ein oder mehreren Oberflächen des zumindest einen Grundkörpers gepresst wird, insbesondere wobei die Kleberschicht sowie die Ablöseschicht der Transferfolie aktiviert und insbesondere wobei die Transferfolie anschließend von der auf dem Grundkörper haftenden Transferlage abgezogen wird, insbesondere wobei hierdurch ein durch die Formgebung des Prägewerkzeugs bestimmter Ausschnitt der Transferlage als die ein oder mehreren Einlegeelemente appliziert werden.

Weiter ist es auch möglich, dass ein oder mehrere Schritte der folgenden weiteren Schritte und/oder dass zumindest eine Kombination von ein oder mehreren Schritten der folgenden ein oder mehreren Schritte durchgeführt werden, insbesondere ausgewählt aus: Bedrucken, insbesondere Inkjet-Druck und/oder Tampondruck, Etikettieren, insbesondere Aufkleben von Labels, Ein- und/oder Aufbringen von Lasermarkierungen, Lasern, insbesondere Ablation beziehungsweise Materialabtrag und/oder Schwärzen und/oder Farbumschlag, bevorzugt lasersensitiver Schichten oder Bereiche des Bauteils und/oder des Grundkörpers, Kaltprägen, Heißprägen, Thermotransfer, vorzugsweise wobei diese Schritte insbesondere vor und/oder nach der Entformung des Bauteils und/oder des zumindest einen Grundkörpers und/oder des Bauteils umfassend den zumindest einen Grundkörper auf, bevorzugt vor und/oder nach dem Schritt d), weiter bevorzugt vor und/oder nach der Entformungsstation, und/oder insbesondere vor und/oder nach dem Überfluten, bevorzugt vor und/oder nach dem Schritt e), angeordnet sind.

Weiter ist es möglich, dass weitere Schritte nach dem Entformen beziehungsweise nach der Entformung des Bauteils und/oder des zumindest einen Grundkörpers und/oder des Bauteils umfassend den zumindest einen Grundkörper erfolgen, wobei ein oder mehrere der weiteren Schritte bevorzugt ausgewählt sind aus: Bestücken mit Funktionselementen, insbesondere Bestücken mit Leiterplatten und/oder elektronischen Bauelementen und/oder mechanischen Bauelementen und/oder Befestigungselementen, Beschichten, insbesondere Beschichten mit Kleber und/oder mit weiteren, bevorzugt unterschiedlichen, Funktionsschichten, Einbauen und/oder Anbauen an und/oder in weitere, insbesondere unterschiedliche, Körper und/oder Grundkörper, bevorzugt Körper aller Art.

Es ist auch möglich, dass die Vorrichtung 10 eine Anzahl n Arbeitsstationen, insbesondere ein oder mehrere Spritzgießstationen 3a, 3a1, 3a2, ein oder mehrere Überflutungsstationen 3b, 3b1, 3b2, ein oder mehrere Vorbehandlungsstationen 3c, ein oder mehrere Prüfstationen 3d, ein oder mehrere Reinigungsstationen 3e und ein oder mehrere Entformungsstationen 3f aufweist, und dass auf dem zumindest einen oberen Werkzeugträger 2a und/oder auf dem zumindest einen unteren Werkzeugträger 2b vorzugsweise jeweils zumindest n obere und/oder untere Werkzeugmodule 20a, 20b, insbesondere umfassend obere und/oder untere Werkzeugformhälften und/oder obere und/oder untere Überflutungshälften, angeordnet sind.

Weiter ist es möglich, dass die Vorrichtung 10 eine Prozesssteuervorrichtung 10b aufweist, welche die Stellvorrichtung 10a derart ansteuert, dass die zumindest zwei oberen Werkzeugmodule 20a des zumindest einen oberen Werkzeugträgers 2a und/oder dass das zumindest eine untere Werkzeugmodul 20b des zumindest einen unteren Werkzeugträgers 2b zyklisch oder antizyklisch in einer vordefinierten Abfolge zwei oder mehrere Arbeitsstationen 3 der Vorrichtung 10 zugeführt werden, insbesondere in einer Abfolge:
Spritzgießstation 3a - Überflutungsstation 3b,
Spritzgießstation 3a - Überflutungsstation 3b - Entformungsstation 3f,
Spritzgießstation 3a - Vorbehandlungsstation 3c - Überflutungsstation 3b - Entformungsstation 3f,
Spritzgießstation 3a - Überflutungsstation 3b - weitere Spritzgießstation - Entformungsstation 3f,
Spritzgießstation 3a - Vorbehandlungsstation 3c - Überflutungsstation 3b - weitere Spritzgießstation - Entformungsstation 3f,
Spritzgießstation 3a - Vorbehandlungsstation 3c - Überflutungsstation 3b - weitere Spritzgießstation - Reinigungsstation 3e - Entformungsstation 3f,
Spritzgießstation 3a - Vorbehandlungsstation 3c - Überflutungsstation 3b - weitere Spritzgießstation - weitere Vorbehandlungsstation - weitere Überflutungsstation - Reinigungsstation 3e - Entformungsstation 3f,
Spritzgießstation 3a - Vorbehandlungsstation 3c - Überflutungsstation 3b - weitere Spritzgießstation - weitere Vorbehandlungsstation - weitere Überflutungsstation - Reinigungsstation 3e - Prüfstation 3d - Entformungsstation 3f.

### Bezugszeichenliste:

- 1: Bauteil
- 10: Vorrichtung
- 10a: Stellvorrichtung
- 10b: Prozesssteuervorrichtung
- 2a: Oberer Werkzeugträger
- 2b: Unterer Werkzeugträger
- 20a: Oberes Werkzeugmodul
- 20b: Unteres Werkzeugmodul
- 20aa: Erstes oberes Werkzeugmodul
- 20ab: Zweites oberes Werkzeugmodul
- 20ba: Erstes unteres Werkzeugmodul
- 200aa: Erste obere Werkzeugformhälfte
- 200ab: Zweite obere Werkzeugformhälfte
- 200ba: Erste untere Werkzeugformhälfte
- 2000: Erste Spritzgusskavität
- 2001: Zweite Spritzgusskavität
- 2000aa: Erste obere Werkzeugkavität
- 2000ab: Erste obere Überflutungshälfte
- 2000ba: Erste untere Werkzeugkavität
- 3: Arbeitsstation
- 3a: Spritzgießstation
- 3a1: Erste Spritzgießstation
- 3a2: Zweite Spritzgießstation
- 3aa: Spritzgusswerkzeug
- 3ab: Einlegeeinheit
- 3ac: Schließvorrichtung
- 3ad: Spritzeinheit
- 3b: Überflutungsstation
- 3b1: Erste Überflutungsstation
- 3b2: Zweite Überflutungsstation
- 3c: Vorbehandlungsstation
- 3d: Prüfstation
- 3e: Reinigungsstation
- 3f: Entformungsstation
- 4: Grundkörper
- 4a: Erstes Kunststoffmaterial
- 5: Einlegeelement
- 6: Erste Deckschicht
- 6a: Zweites Kunststoffmaterial
- 7: Zweite Deckschicht
- 7a: Drittes Kunststoffmaterial
- A: Verfahrensschritt
- B: Verfahrensschritt
- C: Verfahrensschritt
- D: Verfahrensschritt
- a1: Verfahrensschritt
- a: Verfahrensschritt
- b: Verfahrensschritt
- c: Verfahrensschritt
- d: Verfahrensschritt
- e: Verfahrensschritt
- f: Verfahrensschritt
- R1: Richtung beziehungsweise Gegenrichtung
- R2: Richtung beziehungsweise Gegenrichtung
- R3: Richtung beziehungsweise Gegenrichtung
- R4: Richtung beziehungsweise Gegenrichtung
- R5: Richtung beziehungsweise Gegenrichtung
- R6: Richtung beziehungsweise Gegenrichtung
- R7: Richtung beziehungsweise Gegenrichtung
- R8: Richtung beziehungsweise Gegenrichtung
- R9: Richtung beziehungsweise Gegenrichtung
- R10: Richtung beziehungsweise Gegenrichtung
- R11: Richtung beziehungsweise Gegenrichtung
- D1: Drehrichtung beziehungsweise Gegendrehrichtung

## Patentansprüche

1. Verfahren zur Herstellung eines Bauteils (1), wobei bei dem Verfahren folgende Schritte durchgeführt werden:
- Bereitstellen zumindest eines oberen Werkzeugträgers (2a) und zumindest eines unteren Werkzeugträgers (2b), wobei der zumindest eine obere Werkzeugträger (2a) zumindest zwei obere Werkzeugmodule (20a) und der zumindest eine untere Werkzeugträger (2b) zumindest ein unteres Werkzeugmodul (20b) aufweist,
- Verfahren des zumindest einen oberen Werkzeugträgers (2a) und/oder des zumindest einen unteren Werkzeugträgers (2b) in zumindest einer Richtung in zumindest eine vorbestimmte Position,
- Kombination eines ersten oberen Werkzeugmoduls (20aa) der zumindest zwei oberen Werkzeugmodule (20a) des zumindest einen oberen Werkzeugträgers (2a) und eines ersten unteren Werkzeugmoduls (20ba) des zumindest einen ersten unteren Werkzeugmoduls (20b) des zumindest einen unteren Werkzeugträgers (2b) in der zumindest einen vorbestimmten Position derart, dass eine oder mehrere Arbeitsstationen (3) zur Durchführung zumindest eines Herstellungsschritts des Bauteils (1) ausgebildet werden,
- Durchführung des zumindest einen Herstellungsschritts zur Ausbildung des Bauteils (1),
wobei das erste obere Werkzeugmodul (20aa) der zumindest zwei oberen Werkzeugmodule (20a) des zumindest einen oberen Werkzeugträgers (2a) und das zumindest eine erste untere Werkzeugmodul (20ba) des zumindest einen unteren Werkzeugmoduls (20b) des zumindest einen unteren Werkzeugträgers (2b) in der zumindest einen vorbestimmten Position derart kombiniert werden, dass ein oder mehrere Arbeitsstationen der ein oder mehreren Arbeitsstationen (3) als Spritzgießstation (3a) umfassend ein Spritzgusswerkzeug (3aa) ausgebildet werden, wobei das Spritzgusswerkzeug (3aa) das erste obere Werkzeugmodul (20aa) und das erste untere Werkzeugmodul (20ba) aufweist, wobei das erste obere Werkzeugmodul (20aa) eine erste obere Werkzeugformhälfte (200aa) mit zumindest einer ersten oberen Werkzeugkavität (2000aa) aufweist und das erste untere Werkzeugmodul (20ba) eine erste untere Werkzeugformhälfte (200ba) mit zumindest einer ersten unteren Werkzeugkavität (2000ba) aufweist,
wobei das Verfahren die folgenden Schritte umfasst:
a) Schließen des Spritzgusswerkzeugs (3aa) umfassend die erste obere Werkzeugformhälfte (200aa) mit der zumindest einen ersten oberen Werkzeugkavität (2000aa), und die erste untere Werkzeugformhälfte (200ba) mit der zumindest einen ersten unteren Werkzeugkavität (2000ba), wobei zumindest eine von der ersten oberen Werkzeugkavität (2000aa) und der ersten unteren Werkzeugkavität (2000ba) bestimmte erste Spritzgusskavität (2000) ausgebildet wird,
b) Spritzgießen zumindest eines Grundkörpers (4) durch Einbringung eines ersten Kunststoffmaterials (4a) in die zumindest eine erste Spritzgusskavität (2000),
c) Öffnen des Spritzgusswerkzeugs (3aa), wobei der zumindest eine Grundkörper (4) konturfolgend in der zumindest einen ersten unteren oder ersten oberen Werkzeugkavität (2000aa, 2000ba) verbleibt und lediglich zumindest ein erster Teilbereich ein oder mehrerer Oberflächen des zumindest einen Grundkörpers (4) freigelegt wird, wobei zumindest ein zweiter Teilbereich der Oberfläche des Grundkörpers (4) jedoch noch in der ersten oberen oder unteren Werkzeugkavität (2000aa, 2000ba) verbleibt,
d) Entformung des Bauteils (1) umfassend den zumindest einen Grundkörper (4) aus der ersten oberen oder unteren Werkzeugkavität (2000aa, 2000ba) beziehungsweise Werkzeugformhälfte (200aa, 200ba),
wobei ein zweites oberes Werkzeugmodul (20ab) der zumindest zwei oberen Werkzeugmodule (20a) des zumindest einen oberen Werkzeugträgers (2a) und das erste untere Werkzeugmodul (20ba) des zumindest einen unteren Werkzeugmoduls (20b) des zumindest einen zweiten Werkzeugträgers (2b) in der zumindest einen vorbestimmten Position derart kombiniert werden, dass ein oder mehrere Arbeitsstationen der ein oder mehreren Arbeitsstationen (3) als Überflutungsstation (3b) umfassend das zweite obere Werkzeugmodul (2ab) und das erste untere Werkzeugmodul (2ba) ausgebildet ist,
wobei nach dem Schritt d) einfach oder mehrfach folgender weiterer Schritt durchgeführt wird:
e) Aufbringen zumindest einer ersten Deckschicht (6) aus einem zweiten Kunststoffmaterial (6a) mittels Überfluten auf zumindest einen Teilbereich der Oberfläche des zumindest einen Grundkörpers (4),
wobei bei der Durchführung des Schritts e) zumindest eine zweite Spritzgusskavität (2001) mittels ein oder mehrerer weiterer oberer Werkzeugformhälften der zumindest zwei oberen Werkzeugmodule (20a) des zumindest einen oberen Werkzeugträgers (2a) oder ein oder mehrerer weiterer unterer Werkzeugformhälften des zumindest einen unteren Werkzeugmoduls (20b) des zumindest einen unteren Werkzeugträgers (2b) durch Abdichten der ein oder mehreren weiteren oberen oder unteren weiteren Werkzeugformhälften gegen den Grundkörper (4) oder die erste obere oder untere weitere Werkzeugformhälfte ausgebildet wird, und das zweite Kunststoffmaterial (6a) in die zumindest eine zweite Spritzgusskavität (2001) eingebracht wird.

2. Verfahren nach Anspruch 1,
**dadurch gekennzeichnet,**
**dass** vor dem Schritt a) und/oder d) einfach oder mehrfach folgender weiterer Schritt durchgeführt wird:
a1) Einlegen ein oder mehrerer Einlegeelemente (5) in die zumindest eine erste Spritzgusskavität (2000) und/oder auf zumindest einen freiliegenden ersten Teilbereich des zumindest einen freiliegenden ersten Teilbereichs der Oberfläche des zumindest einen Grundkörpers (4), wobei der zumindest eine Grundkörper (4) konturfolgend in der zumindest einen ersten oberen oder ersten unteren Werkzeugkavität (2000aa, 2000ba) der ersten oberen oder ersten unteren Werkzeugformhälfte (200aa, 200ba) verbleibt,
insbesondere wobei der Grundkörper (4) in dem Schritt d) ein oder mehrere oder alle Einlegeelemente der ein oder mehreren Einlegeelemente (5) umfasst.

3. Verfahren nach Anspruch 1,
**dadurch gekennzeichnet,**
**dass** bei der Durchführung des Schritts e) der zumindest eine Grundkörper (4) konturfolgend in der ersten oberen oder ersten unteren Werkzeugkavität (2000aa, 2000ba) der ersten oberen oder ersten unteren Werkzeugformhälfte (200aa, 200ba) verbleibt.

4. Verfahren nach einem der vorhergehenden Ansprüche,
**dadurch gekennzeichnet,**
**dass** zwischen den Schritten b), c) und/oder d) und/oder zwischen den Schritten d) und e) einfach oder mehrfach folgender Schritt durchgeführt wird:
- Vorbehandeln zumindest eines freiliegenden ersten Teilbereichs des zumindest einen freiliegenden ersten Teilbereichs der Oberfläche des zumindest einen Grundkörpers (4), insbesondere durch ein oder mehrere Bearbeitungsverfahren und/oder Kombinationen aus ein oder mehreren Bearbeitungsverfahren ausgewählt aus: Begasung, Beflammung, Plasmabehandlung, Fluorierung, Bestrahlung, Reinigung, Oberflächenaktivierung, Beschichtung,
und/oder dass nach dem Schritt c) oder d) und/oder zwischen den Schritten d) und e) und/oder nach dem Schritt e) folgender Schritt durchgeführt wird:
- Reinigung, insbesondere mittels Bürsten und/oder Druckluft und/oder Absaugung.

5. Verfahren nach einem der vorhergehenden Ansprüche,
**dadurch gekennzeichnet,**
**dass** vor dem Schritt a) ein oder mehrere weitere Einlegeelemente (5) in die zumindest eine erste Spritzgusskavität (2000) einbracht werden, insbesondere in die erste obere und/oder erste untere Werkzeugformhälfte (200aa, 200ba) eingelegt werden, und in Schritt b) mit dem ersten Kunststoffmaterial (4a) hinterspritzt und/oder umspritzt werden, und/oder dass bei der Durchführung des Schritts a1) ein oder mehrere Einlegeelemente der ein oder mehreren Einlegeelemente (5) registergenau zu ein oder mehreren weiteren Einlegeelemente der ein oder mehreren weiteren Einlegeelemente eingelegt werden, insbesondere wobei ein oder mehrere Registermarken oder optische Merkmale der ein oder mehreren weiteren Einlegeelemente und/oder der ersten oberen und/oder ersten unteren Werkzeugkavitäten (2000aa, 2000ba) beziehungsweise Werkzeugformhälften (200aa, 200ba) erfasst werden und zur Steuerung des Einlegens verwendet werden.

6. Verfahren nach einem der vorhergehenden Ansprüche,
**dadurch gekennzeichnet,**
**dass** zwischen den Schritten d) und e) oder nach dem Schritt e) folgender Schritt durchgeführt wird:
f) Aufbringen zumindest einer zweiten Deckschicht (7) auf zumindest einen Teilbereich der Oberfläche des zumindest einen Grundkörpers (4).

7. Verfahren nach Anspruch 6,
**dadurch gekennzeichnet,**
**dass** in dem Schritt f) die zumindest eine zweite Deckschicht (7) mittels der Überflutungsstation (3b) derart aufgebracht wird, dass ein oder mehrere Einlegeelemente der ein oder mehreren Einlegeelemente (5) zwischen dem zumindest einen Grundkörper (4) und der zumindest einen zweiten Deckschicht (7) zumindest teilweise eingekapselt sind,
und/oder dass in Schritt f) die zumindest eine zweite Deckschicht (7) mittels der Überflutungsstation (3b) derart aufgebracht wird, dass die zumindest eine zweite Deckschicht (7) die ein oder mehreren Einlegeelemente (5) und/oder den zumindest einen ersten Teilbereich der Oberfläche des Grundkörpers (4) lediglich teilflächig oder vollständig überlappt.

8. Verfahren nach einem der Ansprüche 6 bis 7,
**dadurch gekennzeichnet,**
**dass** die zumindest eine zweite Deckschicht (7) aus einem dritten Kunststoffmaterial (7a) besteht,
und/oder dass das erste und/oder zweite und/oder dritte Kunststoffmaterial (4a, 6a, 7a) aus einem thermoplastischen Kunststoffmaterial, aus einem durch Vernetzung aushärtenden Kunststoffmaterial, insbesondere einem 2K-Material und/oder Zweikomponentenmaterial und/oder aus einem thermisch und/oder aus einem durch Strahlung härtbaren Material, und/oder aus einer Mischung derartiger Kunststoffmaterialien besteht und/oder wobei dass das erste und/oder zweite und/oder dritte Kunststoffmaterial (4a, 6a, 7a),
insbesondere durch Bestrahlung, vollständig oder teilweise ausgehärtet wird, und/oder dass das erste und/oder zweite und/oder dritte Kunststoffmaterial (4a, 6a, 7a) aus Polyurethan oder Polyurea besteht und das erste und/oder zweite und/oder dritte Kunststoffmaterial (4a, 6a, 7a) aus einem Thermoplast, insbesondere aus ABS, ASA, ABS-PC, PC-PBT und/oder ASA-PC besteht und/oder dass die Zusammensetzung des ersten und/oder zweiten und/oder dritten Kunststoffmaterials (4a, 6a, 7a) aus der Gruppe, die aus Polyurethan-haltigen Dispersionen, Polyurethan-haltigen Harzen, Polyurethan-Lösungen, Zusammensetzungen aus Polyurethan-Vorläufern (2K-PUR Systemen) und Mischungen davon besteht, ausgewählt wird.

9. Vorrichtung (10) zur Herstellung eines Bauteils (1) zur Durchführung eines Verfahrens nach einem der vorhergehenden Ansprüche,
**dadurch gekennzeichnet,**
**dass** die Vorrichtung (10) zumindest einen oberen Werkzeugträger (2a) und zumindest einen unteren Werkzeugträger (2b) aufweist,
wobei der zumindest eine obere Werkzeugträger (2a) zumindest zwei obere Werkzeugmodule (20a) und der zumindest eine untere Werkzeugträger (2b) zumindest ein unteres Werkzeugmodul (20b) aufweist,
wobei der zumindest eine obere Werkzeugträger (2a) und/oder der zumindest eine untere Werkzeugträger (2b) in zumindest einer Richtung in zumindest eine vorbestimmte Position verfahrbar sind und
wobei ein erstes oberes Werkzeugmodul (20aa) der zumindest zwei oberen Werkzeugmodule (20a) des zumindest einen oberen Werkzeugträgers (2a) und ein erstes unteres Werkzeugmodul (20ba) des zumindest einen unteren Werkzeugmoduls (20b) des zumindest einen unteren Werkzeugträgers (2b) derart in der zumindest einen vorbestimmten Position kombinierbar sind, dass ein oder mehrere Arbeitsstationen (3), ausgebildet werden.

10. Vorrichtung (10) nach Anspruch 9,
**dadurch gekennzeichnet,**
**dass** der zumindest eine obere Werkzeugträger (2a) aufweisend die zumindest zwei oberen Werkzeugmodule (20a) in die zumindest eine Richtung in zumindest eine vorbestimmte Position verfahrbar ist oder dass der zumindest eine untere Werkzeugträger (2b) aufweisend das zumindest eine untere Werkzeugmodul (20b) in die zumindest eine Richtung in zumindest eine vorbestimmte Position verfahrbar ist oder dass der zumindest eine obere Werkzeugträger (2a) und der zumindest eine untere Werkzeugträger (2b) in die zumindest eine Richtung in die zumindest eine vorbestimmte Position verfahrbar sind,
und/oder dass der zumindest eine obere Werkzeugträger (2a) aufweisend die zumindest zwei oberen Werkzeugmodule (20a) und/oder dass der zumindest eine untere Werkzeugträger (2b) aufweisend das zumindest eine untere Werkzeugmodul (20b) entlang einer vorbestimmten Vorzugsrichtung und/oder in einer vorbestimmten Vorzugsebene angeordnet ist oder sind, insbesondere wobei der zumindest eine obere Werkzeugträger (2a) und/oder der zumindest eine untere Werkzeugträger (2b) als, bevorzugt vertikal oder horizontal, angeordneter Drehteller oder Schiebetisch ausgebildet ist oder sind,
und/oder dass zumindest ein oberes Werkzeugmodul der zumindest zwei oberen Werkzeugmodule (20a) des zumindest einen oberen Werkzeugträgers (2a) und/oder dass zumindest ein unteres Werkzeugmodul des zumindest einen unteren Werkzeugmoduls (20b) des zumindest einen unteren Werkzeugträgers (2b) ausgewählt ist oder sind aus:
Werkzeugformhälfte, insbesondere Werkzeugformhälfte umfassend eine Werkzeugkavität, bevorzugt eine erste Werkzeugformhälfte mit einer ersten Werkzeugkavität oder eine zweite Werkzeugformhälfte mit einer zweiten Werkzeugkavität,
und/oder dass ein oder mehrere Arbeitsstationen der ein oder mehreren Arbeitsstationen (3) ausgewählt sind und/oder kombiniert sind aus:
Spritzgießstation, Überflutungsstation, Vorbehandlungsstation, erste weitere Überflutungsstation, weitere Spritzgießstation, zweite weitere Überflutungsstation, Reinigungsstation, Entformungsstation.

11. Vorrichtung (10) nach einem der Ansprüche 9 bis 10,
**dadurch gekennzeichnet,**
**dass** zumindest eine Arbeitsstation der ein oder mehreren Arbeitsstationen (3) als Spritzgießstation (3a) umfassend ein erstes oberes Werkzeugmodul (20aa) der zumindest zwei oberen Werkzeugmodule (20a) des zumindest einen oberen Werkzeugträgers (2a) und ein erstes unteres Werkzeugmodul (20ba) des zumindest einen unteren Werkzeugmoduls (20b) des zumindest einen unteren Werkzeugträgers (2b) ausgebildet ist.

12. Vorrichtung (10) nach Anspruch 11,
**dadurch gekennzeichnet,**
**dass** das erste obere Werkzeugmodul (20aa) eine erste obere Werkzeugformhälfte (200aa) mit einer ersten oberen Werkzeugkavität (2000aa) ist und/oder das erste untere Werkzeugmodul (20ba) eine erste und/oder zweite untere Werkzeugformhälfte (200ba) mit einer ersten und/oder zweiten unteren Werkzeugkavität (2000ba) ist,
und/oder dass die zumindest eine Spritzgießstation (3a) zumindest eine Einlegeeinheit (3ab) aufweist, wobei die zumindest eine Einlegeeinheit (3ab) zum Einlegen ein oder mehrerer Einlegeelemente (5) in die erste obere und/oder die erste untere Werkzeugkavität (2000aa, 2000ba) der ersten oberen beziehungsweise ersten unteren Werkzeugformhälfte (200aa, 200ba) ist.

13. Vorrichtung (10) nach einem der Ansprüche 11 bis 12,
**dadurch gekennzeichnet,**
**dass** die zumindest eine Spritzgießstation (3a) eine Spritzeinheit (3ad) zum Einbringen zumindest eines Grundkörpers (4) ausbildenden ersten Kunststoffmaterials (4a) in die zumindest eine erste Spritzgusskavität (2000) aufweist und/oder zum Aufbringen zumindest einer ersten Deckschicht (6) auf zumindest einen Teilbereich der Oberfläche des zumindest einen Grundkörpers (4) ist, insbesondere wobei die zumindest eine erste Deckschicht (6) aus einem zweiten Kunststoffmaterial (6a) besteht.

14. Vorrichtung (10) nach Anspruch 13,
**dadurch gekennzeichnet,**
**dass** der zumindest einen Grundkörper (4) ein oder mehrere oder alle Einlegeelemente der ein oder mehreren Einlegeelemente (5) umfasst, und/oder dass der zumindest eine Grundkörper (4) konturfolgend in der ersten oberen und/oder ersten unteren Werkzeugkavität (2000aa, 2000ba) der ersten oberen beziehungsweise ersten unteren Werkzeugformhälfte (200aa, 200ba) der ersten oberen beziehungsweise ersten unteren Werkzeugmodule (20aa, 20ba) des zumindest einen oberen beziehungsweise unteren Werkzeugträgers (2a, 2b) und/oder der zumindest einen ersten Spritzgusskavität (2000) angeordnet ist.

15. Vorrichtung (10) nach einem der Ansprüche 9 bis 14,
**dadurch gekennzeichnet,**
**dass** zumindest eine Arbeitsstation der ein oder mehreren Arbeitsstationen (3) als Überflutungsstation (3b) umfassend ein zweites oberes Werkzeugmodul (20ab) der zumindest zwei oberen Werkzeugmodule (20a) des zumindest einen oberen Werkzeugträgers (2a) und das erste untere Werkzeugmodul (2ba) des zumindest einen unteren Werkzeugmoduls (20b) des zumindest einen unteren Werkzeugträgers (2b) ausgebildet ist, insbesondere wobei das zweite obere Werkzeugmodul (20ab) eine zweite obere Werkzeugformhälfte (200ab) mit einer ersten oberen Überflutungshälfte (2000ab) ist und/oder das erste untere Werkzeugmodul (20ba) die erste untere Werkzeugformhälfte (200ba) mit der ersten unteren Werkzeugkavität (2000ba) ist.

16. Vorrichtung (10) nach Anspruch 15,
**dadurch gekennzeichnet,**
**dass** die Überflutungsstation (3b) und/oder die zweite obere Werkzeugformhälfte (200ab) ein Gießwerkzeug oder ein 2K-Werkzeug ist oder umfasst,
und/oder dass die zumindest eine Überflutungsstation (3b) und/oder die zweite obere Werkzeugformhälfte (200ab) eine Überflutungseinheit (3ba) zum Aufbringen zumindest einer zweiten Deckschicht (7) aus einem zweiten Kunststoffmaterial (7a), insbesondere auf zumindest einen Teilbereich der Oberfläche des zumindest einen Grundkörpers (4), bevorzugt mittels Überflutens und/oder teilweisem Überfluten, aufweist.

17. Vorrichtung (10) nach einem der vorhergehenden Ansprüche 9 bis 16, **dadurch gekennzeichnet,**
**dass** die Vorrichtung (10) zumindest eine Vorbehandlungsstation (3c) zur Vorbehandlung zumindest eines Teilbereichs der Oberfläche des zumindest einen Grundkörpers (4), insbesondere durch ein oder mehrere Bearbeitungsverfahren ausgewählt aus: Begasung, Beflammung, Plasmabehandlung, Fluorierung, Bestrahlung, Reinigung, Oberflächenaktivierung, Beschichtung und/oder Kombinationen hieraus aufweist,
und/oder dass die Vorrichtung (10) zumindest eine Reinigungsstation (3e) aufweist, insbesondere zur Reinigung zumindest eines Teilbereichs der Oberfläche des zumindest einen Grundkörpers (4) und/oder des Bauteils (1) mittels Bürsten und/oder Druckluft und/oder Absaugung,
und/oder dass die Vorrichtung (10) eine Entformungsstation (3f) zur Entformung des zumindest einen Grundkörpers (4) und/oder des Bauteils (1) umfassend den zumindest einen Grundkörper (4) aufweist.

## Claims

1. Method for producing a component (1), wherein the following steps are carried out in the method:
- providing at least one upper tool holder (2a) and at least one lower tool holder (2b), wherein the at least one upper tool holder (2a) has at least two upper tool modules (20a), and the at least one lower tool holder (2b) has at least one lower tool module (20b),
- shifting the at least one upper tool holder (2a) and/or the at least one lower tool holder (2b) in at least one direction into at least one predetermined position,
- combining a first upper tool module (20aa) of the at least two upper tool modules (20a) of the at least one upper tool holder (2a) and a first lower tool module (20ba) of the at least one first lower tool module (20b) of the at least one lower tool holder (2b) in the at least one predetermined position in such a way that one or more work stations (3) are formed for carrying out at least one production step of the component (1),
- carrying out the at least one production step for forming the component (1),
wherein the first upper tool module (20aa) of the at least two upper tool modules (20a) of the at least one upper tool holder (2a) and the at least one first lower tool module (20ba) of the at least one lower tool module (20b) of the at least one lower tool holder (2b) are combined in the at least one predetermined position in such a way that one or more work stations of the one or more work stations (3) are formed as an injection moulding station (3a) comprising an injection moulding tool (3aa), wherein the injection moulding tool (3aa) has the first upper tool module (20aa) and the first lower tool module (20ba), wherein the first upper tool module (20aa) has a first upper tool mould half (200aa) with at least one first upper tool cavity (2000aa), and the first lower tool module (20ba) has a first lower tool mould half (200ba) with at least one first lower tool cavity (2000ba),
wherein the method comprises the following steps:
a) closing the injection moulding tool (3aa) comprising the first upper tool mould half (200aa) with the at least one first upper tool cavity (2000aa), and the first lower tool mould half (200ba) with the at least one first lower tool cavity (2000ba), wherein at least one first injection moulding cavity (2000) determined by the first upper tool cavity (2000aa) and the first lower tool cavity (2000ba) is formed,
b) injection moulding at least one base body (4) by introducing a first plastic material (4a) into the at least one first injection moulding cavity (2000),
c) opening the injection moulding tool (3aa), wherein the at least one base body (4) remains following the contour in the at least one first lower or first upper tool cavity (2000aa, 2000ba), and only at least one first partial region of one or more surfaces of the at least one base body (4) is exposed, wherein at least one second partial region of the surface of the base body (4) still remains, however, in the first upper or lower tool cavity (2000aa, 2000ba),
d) demoulding the component (1) comprising the at least one base body (4) from the first upper or lower tool cavity (2000aa, 2000ba) or tool mould half (200aa, 200ba),
wherein a second upper tool module (20ab) of the at least two upper tool modules (20a) of the at least one upper tool holder (2a) and the first lower tool module (20ba) of the at least one lower tool module (20b) of the at least one second tool holder (2b) are combined in the at least one predetermined position in such a way that one or more work stations of the one or more work stations (3) is formed as a flood station (3b) comprising the second upper tool module (2ab) and the first lower tool module (2ba), wherein after step d) the following further step is carried out once or multiple times:
e) applying at least one first covering layer (6) made of a second plastic material (6a) by means of flooding onto at least one partial region of the surface of the at least one base body (4),
wherein, when carrying out step e), at least one second injection moulding cavity (2001) is formed by means of one or more further upper tool mould halves of the at least two upper tool modules (20a) of the at least one upper tool holder (2a), or one or more further lower tool halves of the at least one lower tool module (20b) of the at least one lower tool holder (2b) is formed by sealing the one or more further upper or lower further tool mould halves from the base body (4) or the first upper or lower further tool mould halves, and the second plastic material (6a) is introduced into the at least one second injection moulding cavity (2001).

2. Method according to claim 1,
**characterised in that**
before step a) and/or d), the following further step is carried out once or multiple times:
a1) inserting one or more insertion elements (5) into the at least one first injection moulding cavity (2000) and/or onto at least one exposed first partial region of the at least one first exposed partial region of the surface of the at least one base body (4), wherein the at least one base body (4) remains following the contour in the at least one first upper or first lower tool cavity (2000aa, 2000ba) of the first upper or first lower tool mould half (200aa, 200ba),
in particular wherein the base body (4) in step d) comprises one or more or all insertion elements of the one or more insertion elements (5).

3. Method according to claim 1,
**characterised in that**,
when carrying out step e), the at least one base body (4) remains following the contour in the first upper or first lower tool cavity (2000aa, 2000ba) of the first upper or first lower tool mould half (200aa, 200ba).

4. Method according to one of the preceding claims,
**characterised in that**
the following step is carried out once or several times between steps b), c) and/or d) and/or between steps d) and e):
- pre-treating at least one exposed first partial region of the at least one exposed first partial region of the surface of the at least one base body (4), in particular by means of one or more processing methods and/or combinations of one or more processing methods, selected from: fumigation, flame treatment, plasma treatment, fluorination, irradiation, cleaning, surface activation, coating,
and/or after step c) or d) and/or between steps d) and e) and/or after step e), the following step is carried out:
- cleaning, in particular by means of brushes and/or pressurised air and/or suction.

5. Method according to one of the preceding claims,
**characterised in that**,
before step a), one or more further insertion elements (5) are introduced into the at least one first injection moulding cavity (2000), in particular into the first upper and/or first lower tool mould half (200aa, 200ba), and in step b) back-injected and/or over-moulded with the first plastic material (4),
and/or, when carrying out step a1), one or more insertion elements of the one or more insertion elements (5) are inserted accurately according to register with one or more further insertion elements of the one or more further insertion elements, in particular wherein one or more register marks or optical features of the one or more further insertion elements and/or the first upper and/or first lower tool cavities (2000aa, 2000ba) or tool mould halves (200aa, 200ba) are detected and are used to control the insertion.

6. Method according to one of the preceding claims,
**characterised in that**
the following step is carried out between steps d) and e) or after step e):
f) applying at least one second covering layer (7) to at least one partial region of the surface of the at least one base body (4).

7. Method according to claim 6,
**characterised in that**,
in step f), the at least one second covering layer (7) is applied by means of the flooding station (3b) in such a way that one or more insertion elements of the one of more insertion elements (5) are at least partially encapsulated between the at least one base body (4) and the at least one second covering layer (7),
and/or in step f), the at least one second covering layer (7) is applied by means of the flooding station (3b) in such a way that the at least one second covering layer (7) overlaps only over part of the surface or completely with the one or more insertion elements (5) and/or the at least one first partial region of the surface of the base body (4).

8. Method according to one of claims 6 to 7,
**characterised in that**
the at least one second covering layer (7) consists of a third plastic material (7a), and/or the first and/or second and/or third plastic material (4a, 6a, 7a) consists of a thermoplastic plastic material, of a plastic material hardened by curing, in particular a 2K material and/or two-component material and/or of a material that can be cured thermally and/or of a material that can be cured by radiation, and/or of a mixture of such plastic materials, and/or wherein the first and/or second and/or third plastic material (4a, 6a, 7a), is cured completely or partially, in particular by irradiation,
and/or the first and/or second and/or third plastic material (4a, 6a, 7a) consists of polyurethane or polyurea, and the first and/or second and/or third plastic material (4a, 6a, 7a) consists of a thermoplastic, in particular of ABS, ASAA, ABS-PC, PC-PBT and/or ASA-PC, and/or the composition of the first and/or second and/or third plastic material (4a, 6a, 7a) is selected from the group, which consists of polyurethane-containing dispersions, polyurethane-containing resins, polyurethane solutions, compositions of polyurethane precursors (2K-PUR systems) and mixtures thereof.

9. Device (10) for producing a component (1) for carrying out a method according to one of the preceding claims,
**characterised in that**
the device (10) has at least one upper tool holder (2a) and at least one lower tool holder (2b),
wherein the at least one upper tool holder (2a) has at least two upper tool modules (20a), and the at least one lower tool holder (2b) has at least one lower tool module (20b),
wherein the at least one upper tool holder (2a) and/or the at least one lower tool holder (2b) can be shifted in at least one direction into at least one predetermined position, and wherein a first upper tool module (20aa) of the at least two upper tool modules (20a) of the at least one upper tool holder (2a) and a first lower tool module (20ba) of the at least one lower tool module (20b) of the at least one lower tool holder (2b) can be combined in the at least one predetermined position in such a way that one or more work stations (3) are formed.

10. Device (10) according to claim 9,
**characterised in that**
the at least one upper tool holder (2a) having the at least two upper tool modules (20a) can be shifted in the at least one direction into at least one predetermined position, or the at least one lower tool holder (2b) having the at least one lower tool module (20b) can be shifted in the at least one direction into at least one predetermined position, or the at least one upper tool holder (2a) and the at least one lower tool holder (2b) can be shifted in the at least one direction into the at least one predetermined position, and/or the at least one upper tool holder (2a) having the at least two upper tool modules (20a) and/or the at least one lower tool holder (2b) having the at least one lower tool module (20b) is or are arranged in a predetermined preference direction and/or on a predetermined preference plane, in particular wherein the at least one upper tool holder (2a) and/or the at least one lower tool holder (2b) is or are formed as a preferably vertically or horizontally arranged rotary table or sliding table,
and/or at least one upper tool module of the at least two upper tool modules (20a) of the at least one upper tool holder (2a) and/or at least one lower tool module of the at least one lower tool module (20b) of the at least one lower tool holder (2b) is or are selected from:
tool mould half, in particular tool mould half comprising a tool cavity, preferably a first tool mould half with a first tool cavity or a second tool mould half with a second tool cavity,
and/or one or more work stations of the one or more work stations (3) are selected and/or combined from:
injection moulding station, flooding station, pre-treating station, first further flooding station, further injection moulding station, second further flooding station, cleaning station, demoulding station.

11. Device (10) according to one of claims 9 to 10,
**characterised in that**
at least one work station of the one or more work stations (3) is formed as an injection moulding station (3a) comprising a first upper tool module (20aa) of the at least two upper tool modules (20a) of the at least one upper tool holder (2a) and a first lower tool module (20ba) of the at least one lower tool module (20b) of the at least one lower tool holder (2b).

12. Device (10) according to claim 11,
**characterised in that**
the first upper tool module (20aa) is a first upper tool mould half (200aa) with a first upper tool cavity (2000aa), and/or the first lower tool module (20ba) is a first and/or second lower tool mould half (200ba) with a first and/or second lower tool cavity (2000ba),
and/or the at least one injection moulding station (3a) has at least one insertion unit (3ab), wherein the at least one insertion unit (3ab) is for inserting one or more insertion elements (5) into the first upper and/or the first lower tool cavity (2000aa, 2000ba) of the first upper or first lower tool mould half (200aa, 200ba).

13. Device (10) according to one of claims 11 to 12,
**characterised in that**
the at least one injection moulding station (3a) has an injection unit (3ad) for introducing first plastic material (4a) forming at least one base body (4) into the at least one first injection moulding cavity (2000) and/or is for applying at least one first covering layer (6) to at least one partial region of the surface of the at least one base body (4), in particular wherein the at least one first covering layer (6) consists of a second plastic material (6a).

14. Device (10) according to claim 13,
**characterised in that**
the at least one base body (4) comprises one or more or all insertion elements of the one or more insertion elements (5),
and/or the at least one base body (4) is arranged following the contour in the first upper and/or first lower tool cavity (2000aa, 2000ba) of the first upper or first lower tool mould half (200aa, 200ba) of the first upper or first lower tool modules (20aa, 20ba) of the at least one upper or lower tool holder (2a, 2b) and/or the at least one first injection moulding cavity (2000).

15. Device (10) according to one of claims 9 to 14,
**characterised in that**
at least one work station of the one or more work stations (3) is formed as a flooding station (3b) comprising a second upper tool module (20ab) of the at least two upper tool modules (20a) of the at least one upper tool holder (2a) and the first lower tool module (2ba) of the at least one lower tool module (20b) of the at least one lower tool holder (2b), in particular wherein the second upper tool module (20ab) is a second upper tool mould half (200ab) with a first upper flooding half (2000ab), and/or the first lower tool module (20ba) is the first lower tool mould half (200ba) with the first lower tool cavity (2000ba).

16. Device (10) according to claim 15,
**characterised in that**
the flooding station (3b) and/or the second upper tool mould half (200ab) is or comprises a mould tool or a 2K tool,
and/or the at least one flooding station (3b) and/or the second upper tool mould half (200ab) has a flooding unit (3ba) for applying at least one second covering layer (7) made of a second plastic material (7a), in particular to at least one partial region of the surface of the at least one base body (4), preferably by means of flooding and/or partially flooding.

17. Device (10) according to one of preceding claims 9 to 16,
**characterised in that**
the device (10) has at least one pre-treatment station (3c) for pre-treating at least one partial region of the surface of the at least one base body (4), in particular by one or more processing methods selected from: fumigation, flame treatment, plasma treatment, fluorination, irradiation, cleaning, surface activation, coating and/or combination thereof,
and/or the device (10) has at least one cleaning station (3e), in particular for cleaning at least one partial region of the surface of the at least one base body (4) and/or the components (1) by means of brushing and/or compressed air and/or suction,
and/or the device (10) has a demoulding station (3f) for demoulding the at least one base body (4) and/or the component (1) comprising the at least one base body (4).

## Revendications

1. Procédé de fabrication d'un composant (1), dans lequel des étapes suivantes sont mises en œuvre dans le procédé :
- la mise à disposition d'au moins un porte-outil supérieur (2a) et d'au moins un porte-outil inférieur (2b), dans lequel l'au moins un porte-outil supérieur (2a) présente au moins deux modules d'outil supérieurs (20a) et l'au moins un porte-outil inférieur (2b) présente au moins un module d'outil inférieur (20b),
- le déplacement de l'au moins un porte-outil supérieur (2a) et/ou de l'au moins un porte-outil inférieur (2b) dans au moins une direction dans au moins une position prédéfinie,
- la combinaison d'un premier module d'outil supérieur (20aa) des au moins deux modules d'outil supérieurs (20a) de l'au moins un porte-outil supérieur (2a) et d'un premier module d'outil inférieur (20ba) de l'au moins un premier module d'outil inférieur (20b) de l'au moins un porte-outil inférieur (2b) dans l'au moins une position prédéfinie de telle manière qu'une ou plusieurs stations de travail (3) sont réalisées pour mettre en œuvre au moins une étape de fabrication du composant (1),
- la mise en œuvre de l'au moins une étape de fabrication pour réaliser le composant (1),
dans lequel le premier module d'outil supérieur (20aa) des au moins deux modules d'outil supérieurs (20a) de l'au moins un porte-outil supérieur (2a) et l'au moins un premier module d'outil inférieur (20ba) de l'au moins un module d'outil inférieur (20b) de l'au moins un porte-outil inférieur (2b) sont combinés dans l'au moins une position prédéfinie de telle manière qu'une ou plusieurs stations de travail des une ou plusieurs stations de travail (3) en tant que station de moulage par injection (3a) comprenant un outil de moulage par injection (3aa) sont réalisées, dans lequel l'outil de moulage par injection (3aa) présente le premier module d'outil supérieur (20aa) et le premier module d'outil inférieur (20ba), dans lequel le premier module d'outil supérieur (20aa) présente une première moitié de moule d'outil supérieur (200aa) avec au moins une première cavité d'outil supérieure (2000aa) et le premier module d'outil inférieur (20ba) présente une première moitié de moule d'outil inférieure (200ba) avec au moins une première cavité d'outil inférieure (2000ba),
dans lequel le procédé comprend les étapes suivantes :
a) la fermeture de l'outil de moulage par injection (3aa) comprenant la première moitié de moule d'outil supérieure (200aa) avec l'au moins une première cavité d'outil supérieure (2000aa), et la première moitié de moule d'outil inférieure (200ba) avec l'au moins une première cavité d'outil inférieure (2000ba), dans lequel au moins une première cavité de moulage par injection (2000) définie par la première cavité d'outil supérieure (2000aa) et la première cavité d'outil inférieure (2000ba) est réalisée,
b) le moulage par injection d'au moins un corps de base (4) par introduction d'un premier matériau en matière plastique (4a) dans l'au moins une première cavité de moulage par injection (2000),
c) l'ouverture de l'outil de moulage par injection (3aa), dans lequel l'au moins un corps de base (4) reste dans l'au moins une première cavité d'outil inférieure ou supérieure (2000aa, 2000ba) en suivant le contour et seulement au moins une première zone partielle d'une ou de plusieurs surfaces de l'au moins un corps de base (4) est dégagée, dans lequel au moins une deuxième zone partielle de la surface du corps de base (4) reste toutefois encore dans la première cavité d'outil supérieure ou inférieure (2000aa, 2000ba),
d) le démoulage du composant (1) comprenant l'au moins un corps de base (4) à partir de la première cavité d'outil supérieure ou inférieure (2000aa, 2000ba) ou de la moitié de moule d'outil (200aa, 200ba),
dans lequel un deuxième module d'outil supérieur (20ab) des au moins deux modules d'outil supérieurs (20a) de l'au moins un porte-outil supérieur (2a) et le premier module d'outil inférieur (20ba) de l'au moins un module d'outil inférieur (20b) de l'au moins un deuxième porte-outil (2b) sont combinés dans l'au moins une position prédéfinie de telle manière qu'une ou plusieurs stations de travail des une ou plusieurs stations de travail (3) sont réalisées comme une station de submersion (3b) comprenant le deuxième module d'outil supérieur (2ab) et le premier module d'outil inférieur (2ba),
dans lequel, après l'étape d), l'étape supplémentaire suivante est mise en œuvre une fois ou plusieurs fois :
e) l'application d'au moins une première couche de recouvrement (6) composée d'un deuxième matériau en matière plastique (6a) par submersion sur au moins une zone partielle de la surface de l'au moins un corps de base (4), dans lequel lors de la mise en œuvre de l'étape e), au moins une deuxième cavité de moulage par injection (2001) est réalisée au moyen d'une ou de plusieurs autres moitiés de moule d'outil supérieures des au moins deux modules d'outil supérieurs (20a) de l'au moins un porte-outil supérieur (2a) ou d'une ou de plusieurs autres moitiés de moule d'outil inférieures de l'au moins un module d'outil inférieur (20b) de l'au moins un porte-outil inférieur (2b) par étanchéification des une ou plusieurs autres moitiés de moule d'outil supérieures ou inférieures contre le corps de base (4) ou la première autre moitié de moule supérieure ou inférieure, et le deuxième matériau en matière plastique (6a) est introduit dans l'au moins une deuxième cavité de moulage par injection (2001).

2. Procédé selon la revendication 1,
**caractérisé en ce**
**qu'**avant l'étape a) et/ou d), l'étape supplémentaire suivante est mise en œuvre une fois ou plusieurs fois :
a1) l'insertion d'un ou de plusieurs éléments d'insertion (5) dans l'au moins une première cavité de moulage par injection (2000) et/ou sur au moins une première zone partielle dégagée de l'au moins une première zone partielle dégagée de la surface de l'au moins un corps de base (4), dans lequel l'au moins un corps de base (4) reste en suivant le contour dans l'au moins une première cavité d'outil supérieure ou inférieure (2000aa, 2000ba) de la première moitié de moule d'outil supérieure ou inférieure (200aa, 200ba),
en particulier dans lequel le corps de base (4) comprend dans l'étape d) un ou plusieurs ou tous les éléments d'insertion des un ou plusieurs éléments d'insertion (5).

3. Procédé selon la revendication 1,
**caractérisé en ce**
**que** lors de la mise en œuvre de l'étape e), l'au moins un corps de base (4) reste en suivant le contour dans la première cavité d'outil supérieure ou inférieure (2000aa, 2000ba) de la première moitié de moule d'outil supérieure ou inférieure (200aa, 200ba).

4. Procédé selon l'une quelconque des revendications précédentes,
**caractérisé en ce**
**qu'**entre les étapes b), c) et/ou d) et/ou entre les étapes d) et e), l'étape suivante est mise en œuvre une fois ou plusieurs fois :
- le prétraitement d'au moins une première zone partielle dégagée de l'au moins une première zone partielle dégagée de la surface de l'au moins un corps de base (4), en particulier par un ou plusieurs procédés d'usinage et/ou des combinaisons d'un ou de plusieurs procédés d'usinage choisis parmi : le dégazage, l'exposition à une flamme, le traitement au plasma, la fluoration, l'irradiation, le nettoyage, l'activation de surface, le revêtement,
et/ou qu'après l'étape c) ou d) et/ou entre les étapes d) et e) et/ou après l'étape e), l'étape suivante est mise en œuvre :
- le nettoyage en particulier par brossage et/ou air comprimé et/ou aspiration.

5. Procédé selon l'une quelconque des revendications précédentes,
**caractérisé en ce**
**qu'**avant l'étape a), un ou plusieurs autres éléments d'insertion (5) sont introduits dans l'au moins une première cavité de moulage par injection (2000),
en particulier sont insérés dans la première moitié de moule d'outil supérieure et/ou inférieure (200aa, 200ba), et sont revêtus par injection côté arrière et/ou sont surmoulés dans l'étape b) du premier matériau de matière plastique (4a), et/ou que lors de la mise en œuvre de l'étape a1), un ou plusieurs éléments d'insertion des un ou plusieurs éléments d'insertion (5) sont insérés exactement par rapport à un ou plusieurs autres éléments d'insertion des un ou plusieurs autres éléments d'insertion, en particulier dans lequel une ou plusieurs marques de repérage ou caractéristiques optiques des un ou plusieurs autres éléments d'insertion et/ou des premières cavités d'outil supérieures et/ou inférieures (2000aa, 2000ba) ou moitiés de moule d'outil (200aa, 200ba) sont détectées et utilisées pour commander l'insertion.

6. Procédé selon l'une quelconque des revendications précédentes,
**caractérisé en ce**
**que** l'étape suivante est mise en œuvre entre les étapes d) et e) ou après l'étape e) :
f) l'application d'au moins une deuxième couche de recouvrement (7) sur au moins une zone partielle de la surface de l'au moins un corps de base (4).

7. Procédé selon la revendication 6,
**caractérisé en ce**
**que** dans l'étape f), l'au moins une deuxième couche de recouvrement (7) est appliquée au moyen de la station de submersion (3b) de telle manière qu'un ou plusieurs éléments d'insertion des un ou plusieurs éléments d'insertion (5) sont au moins en partie encapsulés entre l'au moins un corps de base (4) et l'au moins une deuxième couche de recouvrement (7),
et/ou que, dans l'étape f), l'au moins une deuxième couche de recouvrement (7) est appliquée au moyen de la station de submersion (3b) de telle manière que l'au moins une deuxième couche de recouvrement (7) ne chevauche que partiellement ou totalement les un ou plusieurs éléments d'insertion (5) et/ou l'au moins une première zone partielle de la surface du corps de base (4).

8. Procédé selon l'une quelconque des revendications 6 à 7,
**caractérisé en ce**
**que** l'au moins une deuxième couche de recouvrement (7) est constituée d'un troisième matériau en matière plastique (7a),
et/ou que le premier et/ou le deuxième et/ou le troisième matériau en matière plastique (4a, 6a, 7a) sont constitués d'un matériau en matière plastique thermoplastique, d'un matériau en matière plastique durcissant par réticulation, en particulier d'un matériau à 2 composants et/ou un matériau à deux composants et/ou d'un matériau thermodurcissable et/ou d'un matériau durcissable par irradiation, et/ou d'un mélange de tels matériaux en matière plastique et/ou dans lequel le premier et/ou le deuxième et/ou le troisième matériau en matière plastique (4a, 6a, 7a) sont durcis totalement ou partiellement en particulier par irradiation, et/ou que le premier et/ou le deuxième et/ou le troisième matériau en matière plastique (4a, 6a, 7a) sont constitués de polyuréthane ou de polyurée et le premier et/ou le deuxième et/ou le troisième matériau en matière plastique (4a, 6a, 7a) sont constitués d'un
thermoplastique, en particulier d'ABS, ASA, ABS-PC, PC-PBT et/ou ASA-PC et/ou que la composition du premier et/ou du deuxième et/ou du troisième matériau en matière plastique (4a, 6a, 7a) sont choisis parmi le groupe, qui est constitué de dispersions contenant du polyuréthane, de résines contenant du polyuréthane, de solutions de polyuréthane, de compositions de précurseurs en polyuréthane (systèmes PUR à 2 composants) et de leurs mélanges.

9. Dispositif (10) de fabrication d'un composant (1) pour mettre en œuvre un procédé selon l'une quelconque des revendications précédentes, **caractérisé en ce**
**que** le dispositif (10) présente au moins un porte-outil supérieur (2a) et au moins un porte-outil inférieur (2b),
dans lequel l'au moins un porte-outil supérieur (2a) présente au moins deux modules d'outil supérieurs (20a) et l'au moins un porte-outil inférieur (2b) présente au moins un module d'outil inférieur (20b),
dans lequel l'au moins un porte-outil supérieur (2a) et/ou l'au moins un porte-outil inférieur (2b) peuvent être déplacés dans au moins une direction dans au moins une position prédéfinie et
dans lequel un premier module d'outil supérieur (20aa) des au moins deux modules d'outil supérieurs (20a) de l'au moins un porte-outil supérieur (2a) et un premier module d'outil inférieur (20ba) de l'au moins un module d'outil inférieur (20b) de l'au moins un porte-outil inférieur (2b) peuvent être combinés dans l'au moins une position prédéfinie de telle manière qu'une ou plusieurs stations de travail (3) sont réalisées.

10. Dispositif (10) selon la revendication 9,
**caractérisé en ce**
**que** l'au moins un porte-outil supérieur (2a) présentant les au moins deux modules d'outil supérieurs (20a) peut être déplacé dans l'au moins une direction dans au moins une position prédéfinie ou que l'au moins un porte-outil inférieur (2b) présentant l'au moins un module d'outil inférieur (20b) peut être déplacé dans l'au moins une direction dans au moins une position prédéfinie ou que l'au moins un porte-outil supérieur (2a) et l'au moins un porte-outil inférieur (2b) peuvent être déplacés dans l'au moins une direction dans l'au moins une position prédéfinie,
et/ou que l'au moins un porte-outil supérieur (2a) présentant les au moins deux modules d'outil supérieurs (20a) et/ou que l'au moins un porte-outil inférieur (2b) présentant l'au moins un module d'outil inférieur (20b) sont disposés le long d'une direction de prédilection prédéfinie et/ou dans un plan de prédilection prédéfini, en particulier dans lequel l'au moins un porte-outil supérieur (2a) et/ou l'au moins un porte-outil inférieur (2b) sont réalisés de préférence comme un plateau tournant ou une table coulissante disposé ou disposée de manière préférée verticalement ou horizontalement,
et/ou qu'au moins un module d'outil supérieur des au moins deux modules d'outil supérieurs (20a) de l'au moins un porte-outil supérieur (2a) et/ou qu'au moins un module d'outil inférieur de l'au moins un module d'outil inférieur (20b) de l'au moins un porte-outil inférieur (2b) sont choisis parmi :
une moitié de moule d'outil, en particulier une moitié de moule d'outil comprenant une cavité d'outil, de manière préférée une première moitié de moule d'outil avec une première cavité d'outil ou une deuxième moitié de moule d'outil avec une deuxième cavité d'outil,
et/ou qu'une ou plusieurs stations de travail des une ou plusieurs stations de travail (3) sont choisies et/ou combinées parmi :
une station de moulage par injection, une station de submersion, une station de prétraitement, une première station de submersion supplémentaire, une station de moulage par injection supplémentaire, une deuxième station de submersion supplémentaire, une station de nettoyage, une station de démoulage.

11. Dispositif (10) selon l'une quelconque des revendications 9 à 10,
**caractérisé en ce**
**qu'**au moins une station de travail des une ou plusieurs stations de travail (3) est réalisée comme une station de moulage par injection (3a) comprenant un premier module d'outil supérieur (20aa) des au moins deux modules d'outil supérieurs (20a) de l'au moins un porte-outil supérieur (2a) et un premier module d'outil inférieur (20ba) de l'au moins un module d'outil inférieur (20b) de l'au moins un porte-outil inférieur (2b).

12. Dispositif (10) selon la revendication 11,
**caractérisé en ce**
**que** le premier module d'outil supérieur (20aa) est une première moitié de moule d'outil supérieure (200aa) avec une première cavité d'outil supérieure (2000aa) et/ou le premier module d'outil inférieur (20ba) est une première et/ou une deuxième moitié de moule d'outil inférieure (200ba) avec une première et/ou une deuxième cavité d'outil inférieure (2000ba),
et/ou que l'au moins une station de moulage par injection (3a) présente au moins une unité d'insertion (3ab), dans lequel l'au moins une unité d'insertion (3ab) est destinée à l'insertion d'un ou de plusieurs éléments d'insertion (5) dans la première cavité d'outil supérieure et/ou inférieure (2000aa, 2000ba) de la première moitié de moule supérieure ou inférieure (200aa, 200ba).

13. Dispositif (10) selon l'une quelconque des revendications 11 à 12,
**caractérisé en ce**
**que** l'au moins une station de moulage par injection (3a) présente une unité de pulvérisation (3ad) pour l'introduction d'au moins un premier matériau en matière plastique (4a) réalisant au moins un corps de base (4) dans l'au moins une première cavité de moulage par injection (2000) et/ou pour l'application d'au moins une première couche de recouvrement (6) sur au moins une zone partielle de la surface de l'au moins un corps de base (4), en particulier dans lequel l'au moins une première couche de recouvrement (6) est constituée d'un deuxième matériau en matière plastique (6a).

14. Dispositif (10) selon la revendication 13,
**caractérisé en ce**
**que** l'au moins un corps de base (4) comprend un ou plusieurs ou tous les éléments d'insertion des un ou plusieurs éléments d'insertion (5), et/ou que l'au moins un corps de base (4) est disposé en suivant le contour dans la première cavité d'outil supérieure et/ou inférieure (2000aa, 2000ba) de la première moitié de moule d'outil supérieure ou inférieure (200aa, 200ba) du premier module d'outil supérieur ou inférieur (20aa, 20ba) de l'au moins un porte-outil supérieur ou inférieur (2a, 2b) et/ou de l'au moins une première cavité de moulage par injection (2000).

15. Dispositif (10) selon l'une quelconque des revendications 9 à 14,
**caractérisé en ce**
**qu'**au moins une station de travail des une ou plusieurs stations de travail (3) est réalisée comme une station de submersion (3b) comprenant un deuxième module d'outil supérieur (20ab) des au moins deux modules d'outil supérieurs (20a) de l'au moins un porte-outil supérieur (2a) et le premier module d'outil inférieur (2ba) de l'au moins un module d'outil inférieur (20b) de l'au moins un porte-outil inférieur (2b), en particulier dans lequel le deuxième module d'outil supérieur (20ab) est une deuxième moitié de moule d'outil supérieure (200ab) avec une première moitié de submersion supérieure (2000ab) et/ou le premier module d'outil inférieur (20ba) est la première moitié de moule d'outil inférieure (200ba) avec la première cavité d'outil inférieure (2000ba).

16. Dispositif (10) selon la revendication 15,
**caractérisé en ce**
**que** la station de submersion (3b) et/ou la deuxième moitié de moule d'outil supérieure (200ab) sont ou comprennent un outil de coulée ou un outil à 2 composants,
et/ou que l'au moins une station de submersion (3b) et/ou la deuxième moitié de moule d'outil supérieure (200ab) présentent une unité de submersion (3ba) pour l'application d'au moins une deuxième couche de recouvrement (7) composée d'un deuxième matériau en matière plastique (7a), en particulier sur au moins une zone partielle de la surface de l'au moins un corps de base (4), de manière préférée par submersion et/ou submersion partielle.

17. Dispositif (10) selon l'une quelconque des revendications précédentes 9 à 16,
**caractérisé en ce**
**que** le dispositif (10) présente au moins une station de prétraitement (3c) pour le prétraitement d'au moins une zone partielle de la surface de l'au moins un corps de base (4), en particulier par un ou plusieurs procédés d'usinage choisis parmi : le dégazage, l'exposition à une flamme, le traitement au plasma, la fluoration, l'irradiation, le nettoyage, l'activation de surface, le revêtement et/ou des combinaisons de ceux-ci,
et/ou que le dispositif (10) présente au moins une station de nettoyage (3e), en particulier pour nettoyer au moins une zone partielle de la surface de l'au moins un corps de base (4) et/ou du composant (1) par brossage et/ou air comprimé et/ou aspiration,
et/ou que le dispositif (10) présente une station de démoulage (3f) pour le démoulage de l'au moins un corps de base (4) et/ou du composant (1) comprenant l'au moins un corps de base (4).
